(19) Europäisches Patentamt
European Patent Office
Office européen des brevets

(11) **EP 3 330 732 A1**

(12) **EUROPÄISCHE PATENTANMELDUNG**

(43) Veröffentlichungstag:
**06.06.2018  Patentblatt 2018/23**

(51) Int Cl.:
**G01S 7/00** (2006.01)     **G08G 5/00** (2006.01)
**G01S 13/78** (2006.01)     **G01S 13/87** (2006.01)

(21) Anmeldenummer: **16202053.1**

(22) Anmeldetag: **02.12.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Thales Deutschland GmbH**
**71254 Ditzingen (DE)**

(72) Erfinder: **Kusari, Arberita**
**70469 Stuttgart (DE)**

(74) Vertreter: **DREISS Patentanwälte PartG mbB**
**Friedrichstrasse 6**
**70174 Stuttgart (DE)**

(54) **VERFAHREN UND VERARBEITUNGSEINHEIT EINER ANORDNUNG ZUR FLUGSICHERUNG UND/ODER FLUGLEITUNG VON LUFTFAHRZEUGEN**

(57)    Die Erfindung betrifft ein Verfahren zur Flugsicherung und/oder Flugleitung von Luftfahrzeugen (1). Dabei wird von einer Basisstation (3) einer Flugsicherungs- und/oder Flugleitungsanordnung (8) eine Abfragebotschaft (4) ausgesandt, die von einem Transponder (2) in einem Luftfahrzeug (1) empfangen wird. Von dem Transponder (2) werden Antwortbotschaften (5) zurückgesandt und von Basisstationen (3) empfangen. In den empfangenden Basisstationen (3) oder in einer Verarbeitungseinheit (7) der Flugsicherungs- und/oder Flugleitungsanordnung (8), mit der die aussendende Basisstation (3) und die empfangenden Basisstationen (3) in Verbindung stehen, wird aus dem Absendezeitpunkt (TOT) der Abfragebotschaft (4) und dem Empfangszeitpunkt (TOA) der Antwortbotschaft (5) eine aktuelle Entfernung (R; r; p) des Luftfahrzeugs (1) von der empfangenden Basisstation (3) bzw. eine Position (x, y, z; $x_T$, $y_T$, $z_T$) des Luftfahrzeugs (1) ermittelt. Um die Genauigkeit und Zuverlässigkeit des Verfahrens zu verbessern, wird vorgeschlagen, dass bei der Ermittlung der Entfernung (R; $r_i$, $r_{tx}$; p) bzw. der Position (x, y, z; $x_T$, $y_T$, $z_T$) des Luftfahrzeugs (1) in den empfangenden Basisstationen (3) oder in der Verarbeitungseinheit (7) ein Transponder-individueller Verzögerungsoffset (D; $t_{offset}$) berücksichtigt wird.

Fig. 1

**Beschreibung**

Die vorliegende Erfindung betrifft ein Verfahren zur Flugsicherung und/oder Flugleitung von Luftfahrzeugen, bei dem von mindestens einer Basisstationen einer Flugsicherungs- und/oder Flugleitungsanordnung mindestens eine Abfragebotschaft ausgesandt wird, die von einem Transponder in mindestens einem zu sichernden und/oder zu leitenden Luftfahrzeug empfangen wird, von dem Transponder als Reaktion auf die mindestens eine Abfragebotschaft mindestens eine Antwortbotschaft ausgesandt und von mehreren Basisstationen empfangen wird und in einer Verarbeitungseinheit der Flugsicherungs- und/oder Flugleitungsanordnung, mit der die aussendende und die empfangenden Basisstationen in Verbindung stehen, auf Grundlage des Absendezeitpunkts der Abfragebotschaft und der Empfangszeitpunkte der Antwortbotschaften eine aktuelle Position des Luftfahrzeugs ermittelt wird.

Die Erfindung betrifft ferner eine Verarbeitungseinheit einer Flugsicherungs- und/oder Flugleitungsanordnung für Luftfahrzeuge, wobei die Anordnung mehrere Basisstationen umfasst, von denen mindestens eine ausgebildet ist, Abfragebotschaften auszusenden, die von einem Transponder in mindestens einem zu sichernden und/oder zu leitenden Luftfahrzeug empfangen werden, und von denen mehrere ausgebildet sind, von dem Transponder als Reaktion auf die empfangenen Abfragebotschaften ausgesandte Antwortbotschaften zu empfangen, und die Verarbeitungseinheit mit den Basisstationen in Verbindung steht und ausgebildet ist, auf Grundlage der Absendezeitpunkte der Abfragebotschaften und der Empfangszeitpunkte der Antwortbotschaften eine aktuelle Position des Luftfahrzeugs zu ermitteln.

Aus dem Stand der Technik sind verschiedene Verfahren zur Flugsicherung und/oder Flugleitung von Luftfahrzeugen (sog. Air Traffic Control, ATC) in verschiedenen Phasen eines Flugs (z.B. während des sog. Approach (initial, intermediate and final), Landing, Rollout and Taxiing) bekannt. Diese Verfahren können für Luftfahrzeuge während des Flugs, während des Starts und/oder der Landung und der Bewegung am Boden eingesetzt werden. Die bekannten Verfahren umfassen bspw. sog. Secondary Surveillance Radar, SSR (z.B. MSSR, Mode S, TCAS), Multilateration und ADS-B Ground Surveillance.

In einem sog. hyperbolischen Ansatz senden Transponder von Luftfahrzeugen von sich aus zu vorgegebenen Zeitpunkten (z.B. regelmäßig) Signale aus, die von Basisstationen empfangen werden, die bspw. am Boden angeordnet sind. Der Zeitpunkt ($T0$), zu dem der Transponder am Luftfahrzeug das Signal aussendet, ist nicht bekannt. Bspw. für zwei in einem Abstand zueinander angeordnete Basisstationen A, B lassen sich auf Grundlage der Empfangszeitpunkte (sog. Time of Arrival, TOA) der empfangenen Signale nach folgender Gleichung Entfernungsgleichungen des Luftfahrzeugs zu der Basisstation i aufstellen:

$$R_i = c \cdot (TOA_i - T0)$$

$$R_i = \sqrt{(X - X_i)^2 + (Y - Y_i)^2 + (Z - Z_i)^2}$$

Zu einem gegebenen Zeitpunkt befindet sich das Luftfahrzeug an einer geometrischen Punktewolke mit der konstanten Entfernung $R_2 - R_1$:

$$R_2 - R_1 = c (TOA_2 - TOA_1).$$

Dies beschreibt eine Hyperbel. Wenn zusätzlich eine dritte Basisstation C vorhanden ist, ergeben sich zwei weitere Differenzen:

$$R_2 - R_1 = c (TOA_2 - TOA_1)$$

$$R_2 - R_3 = c (TOA_2 - TOA_3)$$

$$R_1 - R_3 = c (TOA_1 - TOA_3),$$

und somit zwei weitere Hyperbeln (bzw. Hyperboloide im dreidimensionalen Raum). Die Position des Luftfahrzeugs ergibt sich aus dem Schnittpunkt der Hyperbeln.

Vorteilhaft bei diesem hyperbolischen Ansatz ist, dass sich ein Transponder-individueller Verzögerungsoffset nicht auf die Genauigkeit und Zuverlässigkeit der Positionsbestimmung auswirkt. Nachteilig bei dem hyperbolischen Ansatz ist es, dass die geforderte Unabhängigkeit bei nur drei Basisstationen nicht gegeben ist. Aus diesem Grund erfordert der hyperbolische Ansatz zur Positionsermittlung im dreidimensionalen Raum eine vierte Basisstation, um eine eindeutige Positionsbestimmung des Luftfahrzeugs im dreidimensionalen Raum durchführen zu können.

Ein weiterer Nachteil des hyperbolischen Ansatzes ist die Tatsache, dass eine akzeptable Genauigkeit eigentlich nur in einem innerhalb der Basisstationen liegenden Raum erzielt werden kann. Deshalb ist der hyperbolische Ansatz insbesondere für die Verwendung auf Flughäfen geeignet, wenn die Basisstationen um den Flughafen und die Landebahnen herum angeordnet sind. In diesem Fall lässt sich die Position der Luftfahrzeuge mit einer Genauigkeit von etwa 7,5 m ermitteln. Im Landeanflug, der typischerweise außerhalb des von den Basisstationen eingeschlossenen Bereichs liegt, beträgt die Genauigkeit nur noch etwa 20 m und noch weiter entfernt vom Flughafen bzw. noch weiter außerhalb des von den Basisstationen eingeschlossenen Bereichs nur noch etwa 40 m oder noch schlechter. Der auf Flughäfen häufig eingesetzte hyperbolische Ansatz zur Flugsicherung und Flugleitung von Luftfahrzeugen eignet sich somit für den Landeanflug nur sehr eingeschränkt.

In einem neueren Verfahren, dem sog. elliptischen Ansatz senden Transponder von Luftfahrzeugen als Antwort auf Abfragebotschaften von Basisstationen Antwortbotschaften aus, die wiederum von Basisstationen empfangen werden, die bspw. am Boden angeordnet sind. Ein Transponder im Luftfahrzeug empfängt die Abfragebotschaften, generiert Antwortbotschaften und sendet diese wieder aus. Der Zeitpunkt (T0), zu dem der Transponder am Luftfahrzeug eine Antwortbotschaft aussendet, ist nicht bekannt. Anhand der bekannten Aussendezeitpunkte (sog. Time of Transmission, TOT) der Abfragebotschaften von einer ersten Basisstation A und der gemessenen Empfangszeitpunkte (sog. Time of Arrival, TOA) der empfangenen Antwortbotschaften an einer zweiten Basisstation B können folgende Zusammenhänge als Gleichungen definiert werden:

$$R_1 = c \cdot (T0 - TOT)$$

$$R_1 = \sqrt{(X - X_1)^2 + (Y - Y_1)^2 + (Z - Z_1)^2}$$

$$R_2 = c \cdot (TOA - T0)$$

$$R_2 = \sqrt{(X - X_2)^2 + (Y - Y_2)^2 + (Z - Z_2)^2}$$

Zu einem gegebenen Zeitpunkt befindet sich das Luftfahrzeug an einer geometrischen Punktewolke mit der konstanten Entfernung $R_1 + R_2$:

$$R_1 + R_2 = c \ (TOA - TOT),$$

wobei $R_1$ die Entfernung von der aussendenden Basisstation A zu dem Transponder des Luftfahrzeugs und $R_2$ die Entfernung von dem Transponder zu der empfangenden Basisstation B ist. Diese Gleichung beschreibt eine Ellipse (bzw. im dreidimensionalen Raum ein Ellipsoid), in deren Brennpunkten die aussendende Basisstation A und die empfangende Basisstation B angeordnet sind.

Wenn von beiden Basisstationen A und B Antwortbotschaften des Transponders des Luftfahrzeugs empfangen werden, wird der Empfangszeitpunkt an der Basisstation A als $TOA_1$ und der Empfangszeitpunkt an der Basisstation B als $TOA_2$ bezeichnet. Zu einem gegebenen Zeitpunkt befindet sich das Luftfahrzeug an einer geometrischen Punktewolke auf einer Ellipse, in deren Brennpunkten die Basisstationen A und B angeordnet sind, mit der konstanten Entfernung $R_T + R_2$:

$$R_T + R_2 = c \ (TOA_2 - TOT),$$

und auf einer Punktewolke auf einem Kreis (bzw. im dreidimensionalen Raum auf einer Kugel), als eine Sonderform der Ellipse (bzw. des Ellipsoids), bei der die beiden Brennpunkte der Ellipse in dem gemeinsamen Kreismittelpunkt zusammenfallen, in dem die Basisstation A angeordnet ist, mit der konstanten Entfernung $R_T + R_1$:

$$R_T + R_1 = c\ (TOA_1 - TOT),$$

wobei $R_T$ die Entfernung von der aussendenden Basisstation A zu dem Transponder des Luftfahrzeugs, $R_1$ die Entfernung von dem Transponder zu der ersten empfangenden Basisstation A und $R_2$ die Entfernung von dem Transponder zu der zweiten empfangenden Basisstation B ist. Die Position des Luftfahrzeugs ergibt sich aus dem Schnittpunkt der Ellipsen (bzw. der Ellipsoide) bzw. wenn eine der Basisstationen Abfragebotschaften aussendet und Antwortbotschaften empfängt, aus dem Schnittpunkt der Ellipse (bzw. der Ellipsoide) mit dem Kreis (bzw. der Kugel).

Vorteilhaft bei diesem Ansatz ist, dass eine Basisstation eingespart werden kann. Es genügen drei Basisstationen, die Antwortbotschaften empfangen, um eine Position eines Luftfahrzeugs eindeutig ermitteln zu können. Bei drei empfangenden Basisstationen lassen sich selbst in dem Fall, dass sich ein Luftfahrzeug nicht in einem von Basisstationen eingeschlossenen Bereich befindet, mit dem elliptischen Ansatz relativ hohe Genauigkeiten erzielen. Aus diesem Grund ist der elliptische Ansatz zur Flugsicherung und Flugleitung von Luftfahrzeugen, insbesondere für den Landeanflug (sog. Approach) und auf Überlandflügen, besonders gut geeignet.

Nachteilig ist jedoch, dass sich ein Transponder-individueller Verzögerungsoffset auf die Genauigkeit und Zuverlässigkeit der Positionsbestimmung mittels des elliptischen Ansatzes auswirkt. Das führt dazu, dass die Ergebnisse der Ermittlung der Entfernung des Luftfahrzeugs zu einer Basisstation bzw. der Position des Luftfahrzeugs fehlerbehaftet und damit ungenau sind. Aus diesem Grund ist der elliptische Ansatz kaum für den Einsatz auf dem Rollfeld eines Flughafens geeignet. Dort wird also in der Regel weiterhin der hyperbolische Ansatz zur Flugsicherung und/oder Flugleitung eingesetzt, obwohl dieser mehr Basisstationen benötigt als der elliptische Ansatz.

Ausgehend von dem beschriebenen Stand der Technik liegt der vorliegenden Erfindung deshalb die Aufgabe zugrunde, das Verfahren zur Flugsicherung und/oder Flugleitung von Luftfahrzeugen genauer und zuverlässiger zu gestalten, damit bspw. der elliptische Ansatz in allen Phasen des Flugs eines Luftfahrzeugs auch beim Landeanflug (sog. Approach) oder für die Flugsicherung und/oder Flugleitung auf einem Rollfeld eingesetzt werden kann.

Zur Lösung dieser Aufgabe wird ausgehend von dem Verfahren der eingangs genannten Art vorgeschlagen, dass bei der Ermittlung der Position des Luftfahrzeugs ein Transponder-individueller Verzögerungsoffset berücksichtigt wird. Zu diesem Zweck sind entweder in der Basisstation selbst oder in der Verarbeitungseinheit der Anordnung zur Flugsicherung und/oder Flugleitung von Luftfahrzeugen geeignete Algorithmen implementiert, die es ermöglichen, durch Auswertung und Verarbeitung der dort zur Verfügung stehenden oder ermittelten Signale und Messwerte den Verzögerungsoffset zumindest möglichst gut und zuverlässig abzuschätzen und seine Auswirkung auf das Ergebnis der Positionsermittlung des Luftfahrzeugs möglichst gering zu halten, nach Möglichkeit weitgehend zu eliminieren. Bereits vorhanden sind bspw. Werte wie der Aussendezeitpunkt (Time of Transmission, TOT, oder Time of Interrogation, TOI) der Abfragebotschaften, der Empfangszeitpunkt (Time of Arrival, TOA) der Antwortbotschaften, eine Geschwindigkeit c der Signalübertragung der Funksignale (der Abfragebotschaften und Antwortbotschaften), eine bekannte Transponderinhärente Verzögerungszeit aufgrund von Hardware- und/oder Software-mäßigen Eigenschaften des Transponders sowie die genauen Positionen der einzelnen Basisstationen, die Abfragebotschaften aussenden und/oder Antwortbotschaften empfangen.

Bei dem Verfahren werden also von mindestens einer Basisstation der Flugsicherungs- und/oder Flugleitungsanordnung Abfragebotschaften ausgesandt, die von dem Transponder an Bord mindestens eines zu sichernden und/oder zu leitenden Luftfahrzeugs empfangen werden. Von dem Transponder werden als Reaktion auf die Abfragebotschaften Antwortbotschaften ausgesandt (in der Regel nicht über eine Punkt-zu-Punkt-Verbindung, sondern in Form eines Broadcast) und von mehreren Basisstationen der Flugsicherungs- und/oder Flugleitungsanordnung empfangen. Die empfangenden Basisstationen können die mindestens eine aussende Basisstation umfassen. In einer Verarbeitungseinheit der Flugsicherungs- und/oder Flugleitungsanordnung, mit der die Basisstationen in Verbindung stehen, wird dann auf Grundlage der Absendezeitpunkte der Abfragebotschaften und der Empfangszeitpunkte der Antwortbotschaften eine aktuelle Position des Luftfahrzeugs ermittelt.

Gemäß einer vorteilhaften Weiterbildung der Erfindung wird vorgeschlagen, dass die Basisstationen als Bestandteil einer MLAT (Multilateration) Flugsicherungs- und/oder Flugleitungsanordnung ausgebildet sind und dass die Position des Luftfahrzeugs auf Grundlage der Entfernung des Luftfahrzeugs bezüglich der empfangenden Basisstationen (bzw. auf Grundlage von Signallaufzeiten ausgehend von der abfragenden/aussendenden Basisstation zum Luftfahrzeug und vom Luftfahrzeug zu den empfangenden Basisstationen) ermittelt wird. Das erfindungsgemäße Verfahren kann aber auch in einer Radar- Flugsicherungs- und/oder Flugleitungsanordnung verwendet werden. In diesem Zusammenhang wird gemäß einer alternativen Weiterbildung vorgeschlagen, dass die Basisstationen als Radarstationen einer Radar- Flugsicherungs- und/oder Flugleitungsanordnung ausgebildet sind und dass die Position des Luftfahrzeugs auf Grundlage einer Entfernung und eines Winkels des Luftfahrzeugs bezüglich der empfangenden Basisstationen ermittelt wird. Radarstationen haben üblicherweise eine um eine vertikale Drehachse rotierende Antenne und empfangen eine Antwortbotschaft eines Transponders an Bord eines Luftfahrzeugs nur dann, wenn die Antenne auf das Luftfahrzeug gerichtet ist und sich der Transponder in einem Empfangskegel der Antenne befindet. Der Winkel kann ein Azimuthwinkel und/oder ein Elevationswinkel sein.

Zum Erfassen oder Abschätzen des Transponder-individuellen Verzögerungsoffsets ist es besonders vorteilhaft, wenn die bekannten und erfassten Werte über einen längeren Zeitraum hinweg beobachtet, erfasst und ausgewertet werden. Auswirkungen auf die Genauigkeit der Entfernungs- bzw. Positionsermittlung haben dabei nicht nur der Transponder-individuelle Verzögerungsoffset, sondern auch stochastische Zufallsfehlern $\varepsilon$ (bspw. aufgrund von Jitter, atmosphärischen Beeinträchtigungen einer Übertragung der Botschaften und temporären Auswirkungen einer Multipath-Übertragung der Botschaften). Insbesondere die Auswirkungen von Zufallsfehlern $\varepsilon$ lassen sich dadurch reduzieren, dass die bekannten und ermittelten Werte und Signale über einen längeren Zeitraum hinweg unter unterschiedlichen Bedingungen (bspw. von unterschiedlichen Positionen des Luftfahrzeugs aus) beobachtet und ausgewertet werden.

Ferner wird vorgeschlagen, ein überbestimmtes Gleichungssystem aufzustellen und dieses dann unter Ausnutzung der bekannten oder ermittelten Werte zu lösen. Die Gleichungen des Gleichungssystems werden vorzugsweise für mehrere Zeitpunkte und für mehrere aussendende und/oder empfangende Basisstationen erstellt. Durch Lösen des so erhaltenen Gleichungssystems wird der Verzögerungsoffset bzw. für zukünftiges Empfangen einer Antwortbotschaft von dem Transponder die um den Verzögerungsoffset korrigierte Empfangszeit abgeschätzt. Zum Abschätzen des Verzögerungsoffsets bzw. der korrigierten Empfangszeit können verschiedene an sich aus dem Stand der Technik bekannte Lösungs- oder Schätzverfahren verwendet werden, bspw. kann das Gleichungssystem mittels eines Kalman Filters gelöst werden. Vorteilhafterweise wird ein iteratives Verfahren nach der Methode der kleinsten Fehlerquadrate auf das Gleichungssystem angewandt. Als Anfangswerte für die Unbekannten des Gleichungssystems wird für den Transponder-individuellen Verzögerungsoffset Null und für die Position des Transponders des Luftfahrzeugs die von einer anderen Überwachungsquelle geschätzte Position des Transponders verwendet. Die Methode der kleinsten Fehlerquadrate wird abgebrochen, und das Gleichungssystem gilt als näherungsweise gelöst, wenn das iterative Verfahren im Rahmen vorgebbarer Grenzwerte konvergiert.

Gemäß einer vorteilhaften Weiterbildung der Erfindung wird vorgeschlagen, dass der Verzögerungsoffset anhand von mehreren im Vorfeld ausgesandter Abfragebotschaften und empfangener Antwortbotschaften abgeschätzt wird. Das aufgestellte Gleichungssystem wird für diese verschiedenen ausgesandten Abfragebotschaften und empfangenen Antwortbotschaften gelöst.

Das Abschätzen des Transponder-inhärenten Verzögerungsoffsets bzw. der korrigierten Entfernung des Transponders zu einer empfangenden Basisstation bzw. der korrigierten Position des Luftfahrzeugs lässt sich für ein neu in die Reichweite der Basisstationen gelangtes Luftfahrzeug dadurch beschleunigen, dass für einen in Reichweite zu mindestens einer Basisstation neu detektierten Transponder eines Luftfahrzeugs bis zur erfolgreichen Abschätzung des Verzögerungsoffsets die Häufigkeit der ausgesandten Abfragebotschaften gegenüber einem Normalbetrieb der Flugsicherungs- und/oder Flugleitungsanordnung (nachdem der Verzögerungsoffset für den Transponder des neuen Luftfahrzeugs ermittelt worden ist) vorübergehend gezielt erhöht wird. Für ein neu in die Reichweite der Basisstationen gelangtes Luftfahrzeug werden also temporär häufiger Abfragebotschaften ausgesandt als dies für eine Entfernungs- oder Positionsbestimmung des Luftfahrzeugs (Normalbetrieb) eigentlich notwendig wäre. Auf diese Weise werden innerhalb besonders kurzer Zeit möglichst viele Daten und Werte gesammelt, die eine schnelle und zuverlässige Abschätzung des Verzögerungsoffsets bzw. der korrigierten Position des Luftfahrzeugs ermöglichen.

Insbesondere wird vorgeschlagen, dass eine Verarbeitungszeit eines Transponders aus der Gleichung

$$(\text{TOA}_i - \text{TOT}_{tx}) \cdot c = r_{tx} + r_i + (\text{Delay} + \text{D}) \cdot c + \varepsilon \qquad (\text{Gl. 1})$$

ermittelt wird, wobei *TOA_i* ein Empfangszeitpunkt einer Antwortbotschaft von dem Transponder an einer Basisstation, *TOT_{tx}* ein Absendezeitpunkt einer Abfragebotschaft von einer Basisstation, c eine Signalübertragungsgeschwindigkeit, *r_{tx}* eine Entfernung zwischen der aussendenden Basisstation zu dem Transponder, *r_i* eine Entfernung zwischen der empfangenden Basisstation zu dem Transponder, *Delay* eine bekannte inhärente Verzögerungszeit des Transponders, D der zu berücksichtigende unbekannte Transponder-individuelle Verzögerungsoffset und $\varepsilon$ eine Summe von Zufallsfehlern (u.a. Fehler des Transponders, Messfehler in der Basisstation, etc.) ist. Dabei ist

$$r_i = \sqrt{\left(x_T - x_{GS,i}\right)^2 + \left(y_T - y_{GS,i}\right)^2 + \left(z_T - z_{GS,i}\right)^2} ,$$

$$r_{tx} = \sqrt{\left(x_T - x_{GS,tx}\right)^2 + \left(y_T - y_{GS,tx}\right)^2 + \left(z_T - z_{GS,tx}\right)^2},$$

$x_T$, $y_T$, $z_T$ der Position des Transponders und
$x_{GS}$, $y_{GS}$, $z_{GS}$ die Position der empfangenden Basisstation (i)
bzw. der aussendenden Basisstation (tx).

Besonders bevorzugt wird das erfindungsgemäße Verfahren im Rahmen des elliptischen Ansatzes zur Positionsbestimmung von Luftfahrzeugen eingesetzt. Dabei befindet sich ein Luftfahrzeug auf einer Ellipse, in deren Brennpunkten zwei Basisstationen angeordnet sind, wovon eine Abfragebotschaften aussendet und die andere Antwortbotschaften empfängt, und aus dem Schnittpunkt mehrerer Ellipsen wird die Position des Luftfahrzeugs ermittelt. Wenn eine der Basisstationen sowohl Abfragebotschaften aussendet als auch Antwortbotschaften empfängt, liegen die beiden Brennpunkte der Ellipse auf einem gemeinsamen Kreismittelpunkt, so dass sich ein Kreis als Sonderform einer Ellipse ergibt, auf dem das Luftfahrzeug angeordnet ist. Diese Ausgestaltung der Erfindung hat den Vorteil, dass durch die Berücksichtigung des Transponder-inhärenten Verzögerungsoffsets die Genauigkeit des elliptischen Ansatzes deutlich verbessert werden kann. Dadurch kann der elliptische Ansatz auch im Landeanflug (sog. Approach) sowie auf dem Rollfeld eingesetzt werden. Gleichzeitig kann der Vorteil des elliptischen Ansatzes ausgenutzt werden, wonach weniger Basisstationen zur Positionsbestimmung eines Luftfahrzeugs erforderlich sind als beim hyperbolischen Ansatz. Insgesamt ergibt sich somit eine deutlich genauere Positionsbestimmung von Luftfahrzeugen bei gleichzeitiger Kosteneinsparung für Anschaffung, Betrieb und Wartung zusätzlicher Basisstationen. Zusätzlich vorhandene, redundante Basisstationen können zur weiteren Steigerung der Genauigkeit oder Sicherheit der Positionsbestimmung des Luftfahrzeugs genutzt werden.

Die Abfragebotschaften können an alle in Reichweite befindlichen Transponder von Luftfahrzeugen ausgesandt werden (Mode A/C) oder aber gezielt an mindestens einen ausgewählten Transponder von in Reichweite befindlichen Transpondern von Luftfahrzeugen ausgesandt werden (Mode S).

Wenn die Abfragebotschaften an alle in Reichweite befindlichen Transponder ausgesandt werden, können diese nach einem vorgegebenen zeitlichen Muster ausgesandt werden, um die entsprechenden Antwortbotschaften der Transponder von Luftfahrzeugen voneinander unterscheiden und den entsprechenden Abfragebotschaften zuordnen zu können.

Wenn die Abfragebotschaften gezielt an den mindestens einen ausgewählten Transponder ausgesandt werden, können die Abfragebotschaften ein Adressfeld mit mindestens einer individuellen Adresse des mindestens einen ausgewählten Transponders aufweisen.

Weitere Merkmale und Vorteile der vorliegenden Erfindung werden nachfolgend anhand der Figuren näher erläutert. Es zeigen:

Figur 1    ein schematisches Bild zur Veranschaulichung des Prinzips der Ortung und/oder Positionsbestimmung eines Luftfahrzeugs mittels Abfrage-/ Antwortbotschaften;

Figur 2    schematische Bilder zur Veranschaulichung des hyperbolischen Ansatzes zur Ortung und/oder Positionsbestimmung eines Luftfahrzeugs mittels Abfrage-/ Antwortbotschaften;

Figur 3    schematische Bilder zur Veranschaulichung des elliptischen Ansatzes zur Ortung und/oder Positionsbestimmung eines Luftfahrzeugs mittels Abfrage-/ Antwortbotschaften;

Figur 4    eine schematische Luftaufnahme eines beispielhaft gewählten Flughafens;

Figur 5    zwei Luftaufnahmen des Flughafens aus Figur 4 mit eingezeichneten Iso-Linien für eine simulierte Dilution of Precision (DOP) zum einen für den elliptischen Ansatz und zum anderen für den hyperbolischen Ansatz;

Figur 6    zwei Luftaufnahmen des Flughafens aus Figur 4 mit eingezeichneten Iso-Linien für eine simulierte Horizontal Position Accuracy (HPA), d.h. die Genauigkeit der Ortung bzw. Positionsbestimmung eines Luftfahrzeugs zum einen für den elliptischen Ansatz und zum anderen für den hyperbolischen Ansatz bei einem angenommenen Verzögerungsoffset des Transponders von 250 ns; und

Figur 7    zwei Luftaufnahmen des Flughafens aus Figur 4 mit eingezeichneten Iso-Linien für eine simulierte HPA der Ortung bzw. Positionsbestimmung eines Luftfahrzeugs zum einen für den elliptischen Ansatz und zum anderen für den hyperbolischen Ansatz bei einem angenommenen Verzögerungsoffset des Transponders von 0 ns.

Die vorliegende Erfindung betrifft ein Verfahren und eine Anordnung 8 zur Flugsicherung und/oder Flugleitung von Luftfahrzeugen. Das Verfahren kann in einer beliebig ausgebildeten Flugsicherungs- und/oder Flugleitungsanordnung 8 eingesetzt werden. Insbesondere wäre ein Einsatz in einer Radar- Flugsicherung und/oder Flugleitung mit mindestens zwei Radar-Bodenstationen denkbar. Die nachfolgende Beschreibung ist jedoch auf eine Anwendung des Verfahrens in einer MLAT (Multilateration)-Flugsicherungs- und/oder Flugleitungsanordnung 8 gerichtet.

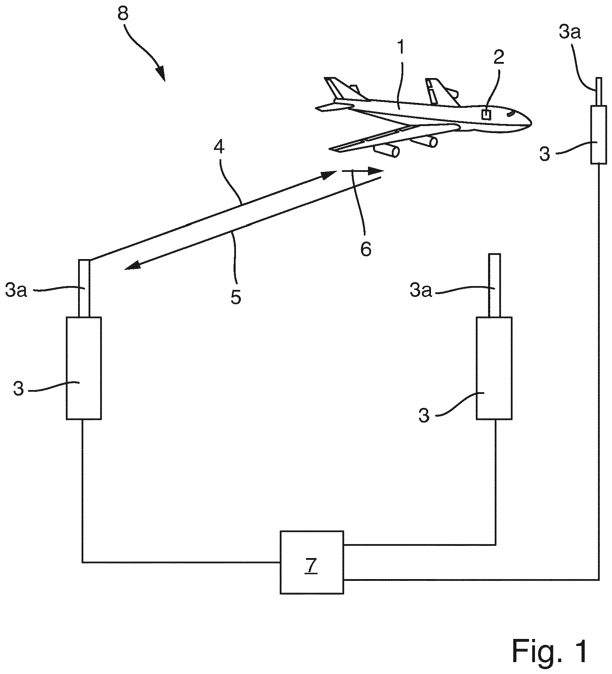

Anhand der Figur 1 soll das dem Verfahren zugrunde liegende Prinzip näher erläutert werden. Ein Luftfahrzeug ist mit dem Bezugszeichen 1 bezeichnet, ein Transponder an Bord des Luftfahrzeugs 1 mit dem Bezugszeichen 2. Eine Basisstation 3, die in diesem Beispiel als eine Bodenstation ausgebildet ist, die am Erdboden angeordnet ist, sendet mindestens eine Abfragebotschaft 4 aus. Zu diesem Zweck verfügt die Basisstation 3 der MLAT-Anordnung 8 über eine feststehende (nicht drehende) Antenne oder ein feststehendes Antennenarray 3a. Bei einer Radar-Anordnung würde die Antenne um eine im Wesentlichen vertikale Drehachse rotieren. Die Abfragebotschaft 4 kann an alle in Reichweite befindlichen Transponder 2 von Luftfahrzeugen 1 ausgesandt werden (sog. broadcasting; one-to-many). Dies wird bspw. nach dem Mode A/C-Standard realisiert. Alternativ kann die Abfragebotschaft 4 auch gezielt an mindestens einen ausgewählten Transponder 2 eines bestimmten Luftfahrzeugs 1 ausgesandt werden (sog. unicast; one-to-one). Dies wird bspw. nach dem Mode S-Standard realisiert.

Selbstverständlich kann die Basisstation 3 auch an Bord eines Satelliten angeordnet sein. Es hat sich gezeigt, dass sich trotz der größeren Entfernung zwischen Luftfahrzeug 1 und satellitengestützter Basisstation 3 keine Probleme hinsichtlich der Signalübertragung und des Empfangs der Signale ergibt. So verfügen bspw. Luftfahrzeuge 1 häufig über Empfangsantennen des Transponders 2, die seitlich an oder gar oben auf dem Rumpf des Luftfahrzeugs 1 angeordnet sind, so dass der Empfang der von einer satellitengestützten Basisstation 3 ausgesandten Abfragebotschaft 4 verbessert ist. Zudem hat der Raum (die Atmosphäre) zwischen dem Satelliten und dem Luftfahrzeug 1 eine sehr geringe, mit zunehmender Höhe abnehmende Dichte, so dass Signale nahezu ungehindert auch über große Entfernungen von bis zu 2.000 km (Low Orbit Satelliten, LEO), bis zu 35.000 km (Medium Orbit Satelliten, MEO) und sogar von 35.786 km (Geostationären Satelliten, GEO) übertragen und von dem Transponder 2 an Bord des Luftfahrzeugs 1 zuverlässig empfangen werden können. Satellitentelefone zeigen seit vielen Jahren, dass die Übertragung auch relativ schwacher Signale zwischen einem auf der Erdoberfläche befindlichen Satellitentelefon und GEO-Satelliten problemlos möglich ist.

Der Transponder 2 empfängt die Abfragebotschaft 4, verarbeitet diese und generiert eine entsprechende Antwortbotschaft 5. Dies ist in Figur 1 durch einen Pfeil 6 symbolisiert. Die Antwortbotschaft 5 wird von dem Transponder 2 ausgesendet. Zu diesem Zweck verfügt der Transponder 2 über eine feststehende Antenne oder ein Antennenarray, das vorzugsweise außen am Rumpf des Luftfahrzeugs 1 angeordnet ist. Auch hier gilt, dass eine Übertragung der Antwortbotschaft 5 von dem Transponder 2 zu Basisstationen 3, die auf Satelliten angeordnet sind, gemäß der obigen Erläuterungen problemlos möglich ist.

Üblicherweise sind bspw. in der Nähe eines Flughafens mehrere Basisstationen 3 vorgesehen, um eine möglichst lückenlose räumliche Abdeckung des Flughafens, des darüber befindlichen und des angrenzenden Luftraums realisieren zu können. Die Basisstationen 3 stehen über Leitungen oder Funk mit einer Verarbeitungseinheit 7 in Verbindung, welche anhand der Absendezeitpunkte (sog. Time of Transmission, TOT, oder Time of Interrogation, TOI) der Abfragebotschaften 4, der Empfangszeitpunkte (sog. Time of Arrival, TOA) der Antwortbotschaften 5, der Position der Basisstationen 3 und eventuelle weiterer Daten die Position des Luftfahrzeugs 1 ermittelt. Die Antwortbotschaft 5 kann an alle in Reichweite befindlichen Basisstationen 3 ausgesandt werden (sog. broadcasting; one-to-many).

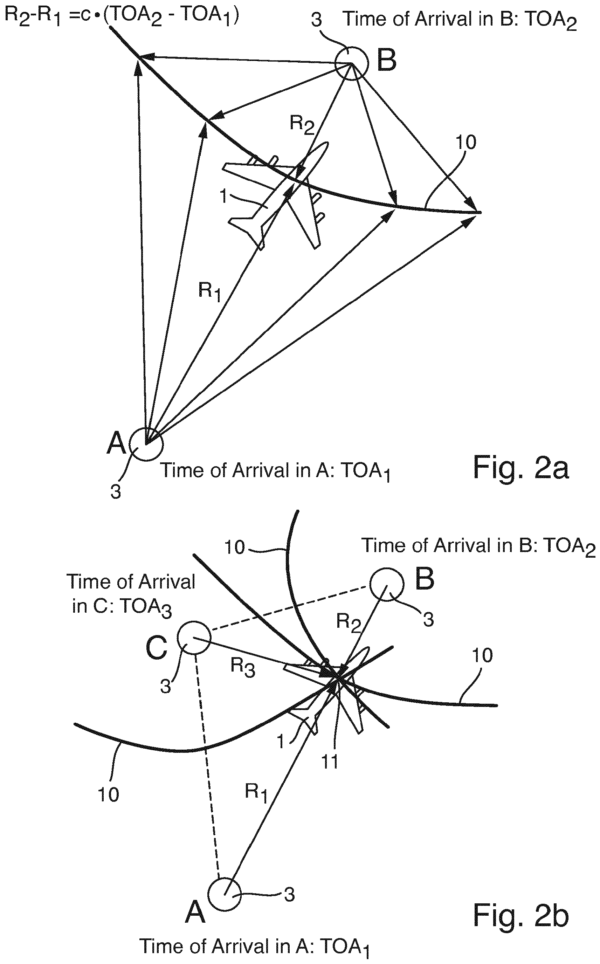

Zur Ermittlung der Position des Luftfahrzeugs 1 sind verschiedene Ansätze bekannt. Ein sog. hyperbolischer Ansatz wird nachfolgend anhand der Figur 2 näher erläutert. Bei diesem Ansatz senden Transponder 2 von Luftfahrzeugen 1 von sich aus oder als Reaktion auf Abfragen externer Systeme (z.B. einer Radarstation) zu vorgegebenen Zeitpunkten (z.B. regelmäßig oder als Reaktion auf die Abfrage des externen Systems) Signale bzw. Botschaften 5 aus, die von Basisstationen 3 am Boden oder an Bord von Satelliten empfangen werden. Der Zeitpunkt (T0), zu dem der Transponder 2 im Luftfahrzeug 1 eine Botschaft 5 aussendet, ist nicht bekannt. Bspw. für zwei in einem Abstand zueinander angeordnete Basisstationen A, B (vgl. Figur 2a) lassen sich auf Grundlage der Empfangszeitpunkte (sog. Time of Arrival, TOA) der empfangenen Signale nach folgender Gleichung Entfernungsgleichungen des Luftfahrzeugs 1 zu der Basisstation i aufstellen:

$$R_i = c \cdot (TOA_i - T0)$$

$$R_i = \sqrt{(X - X_i)^2 + (Y - Y_i)^2 + (Z - z_i)^2}$$

Zu einem gegebenen Zeitpunkt befindet sich das Luftfahrzeug 1 an einer geometrischen Punktewolke mit der konstanten Entfernung $R_2 - R_1$:

$$R_2 - R_1 = c\ (TOA_2 - TOA_1).$$

Dies beschreibt eine Hyperbel 10. Wenn zusätzlich eine dritte Basisstation C vorhanden ist (vgl. Figur 2b), ergeben sich zwei weitere Differenzen:

$$R_2 - R_1 = c\ (TOA_2 - TOA_1)$$

$$R_2 - R_3 = c\ (TOA_2 - TOA_3)$$

$$R_1 - R_3 = c\ (TOA_1 - TOA_3),$$

und somit zwei weitere Hyperbeln 10 (bzw. beim dreidimensionalen Ansatz Hyperboloide). Die Position des Luftfahrzeugs 1 ergibt sich aus dem Schnittpunkt 11 der Hyperbeln 10 (bzw. Hyperboloide).

Der hyperbolische Ansatz erfordert eine vierte Basisstation 3, um eine eindeutige Positionsbestimmung des Luftfahrzeugs 1 im dreidimensionalen Raum durchführen zu können. Eine akzeptable Genauigkeit kann nur innerhalb eines von den Basisstationen 3 eingefassten Bereichs erzielt werden. Deshalb ist der hyperbolische Ansatz insbesondere für die Verwendung auf Flughäfen geeignet, wenn die Basisstationen 3 um das Rollfeld und die Landebahnen herum angeordnet sind. In diesem Fall lässt sich die Position der Luftfahrzeuge 1 mit einer Genauigkeit von etwa 7,5 m ermitteln.

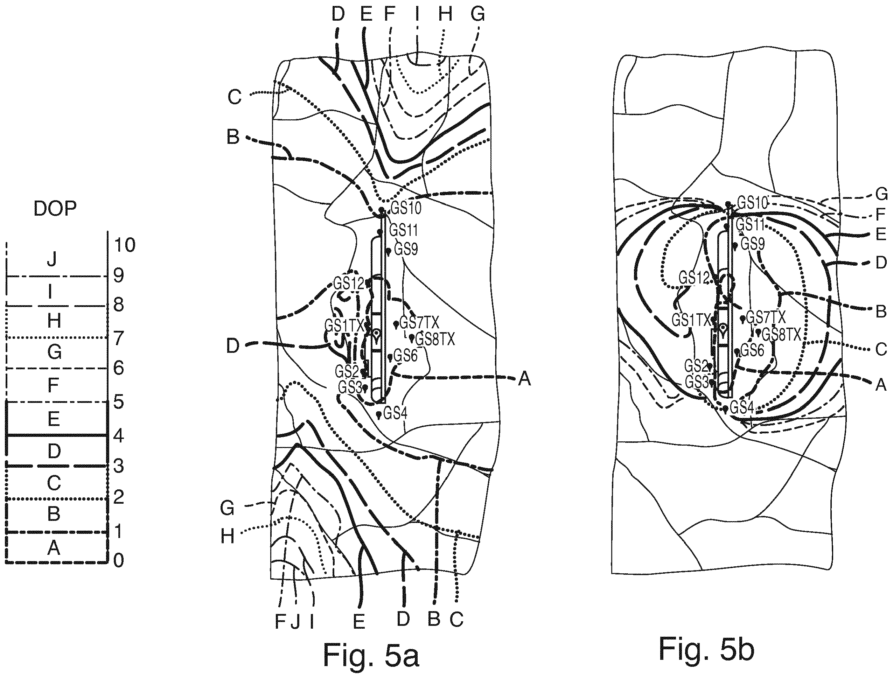

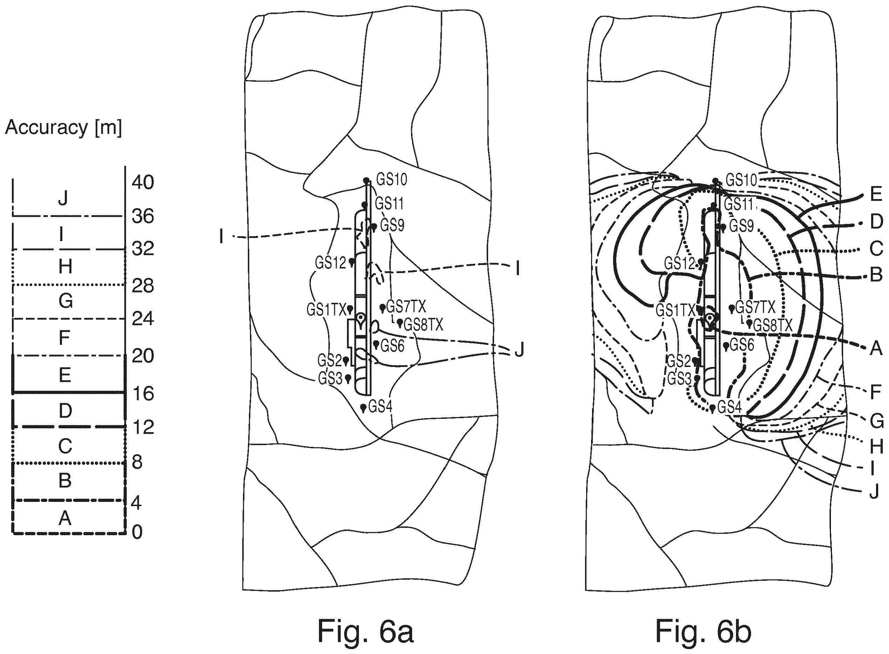

Im Landeanflug, während dem sich das Luftfahrzeug 1 typischerweise außerhalb des von den Basisstationen 3 eingeschlossenen Bereichs befindet, beträgt die Genauigkeit nur noch etwa 20 m und noch weiter entfernt vom Flughafen nur noch etwa 40 m oder noch schlechter. Der typischerweise auf Flughäfen eingesetzte hyperbolische Ansatz zur Flugsicherung und Flugleitung von Luftfahrzeugen 1 eignet sich somit kaum für den Landeanflug. Dies ist auch anhand der Figuren 5b und 6b nachvollziehbar. In Figur 5b ist eine erwartete oder simulierte Dilution of Precision (DOP) für den hyperbolischen Ansatz gezeigt, d.h. wie sich Fehler in dem erfassten Empfangszeitpunkt der Botschaften 5 (Entfernungsfehler) auf die Positionsbestimmung auswirken. Je größer der DOP-Wert ist, desto größer sind die negativen Auswirkungen auf die Positionsbestimmung. Der DOP-Term kommt aus der GPS-Technik und beschreibt die Güte eines Schnittes mehrerer Körper oder Kurven. Ein guter Schnitt ergibt sich bspw. wenn die Kurven (z.B. Hyperbeln oder Ellipsen) sich in einem rechten Winkel (also in einem großen Winkel) schneiden. Der Schnittpunkt lässt sich eindeutig bestimmen. Wenn die Kurven sich in einem flachen Winkel schneiden, ist nicht genau erkennbar, wo der Schnittpunkt liegt, so dass ein schlechter Schnitt vorliegt. Umso kleiner der DOP-Wert, desto besser ist der Schnitt.

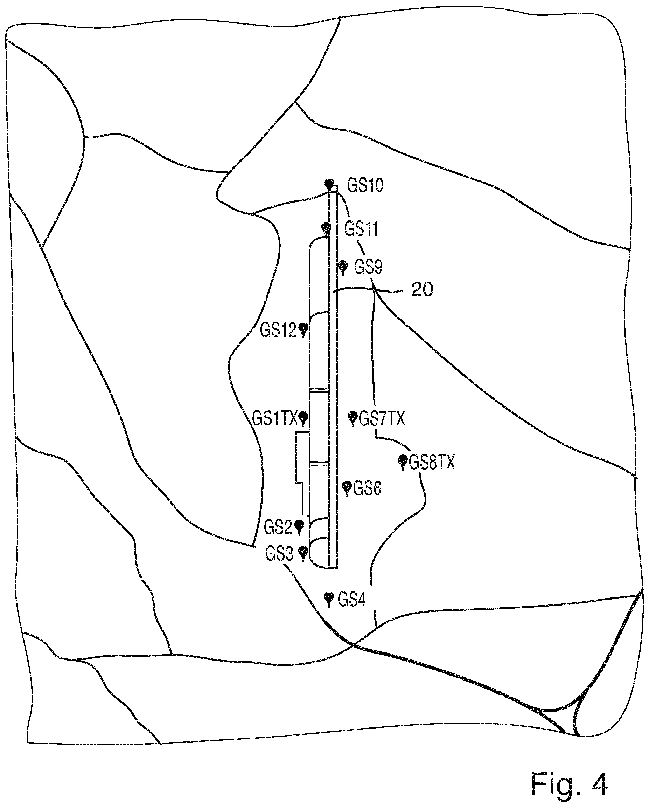

Die Basisstationen 3 auf dem dort beispielhaft gezeigten Flughafen sind mit GS i bezeichnet (i = 1...12). Sendende Basisstationen 3 sind mit GS j TX bezeichnet (j = 1, 7, 8). Anhand der Figur 5b kann man erkennen, dass die negativen Auswirkungen bereits am Anfang und am Ende der Landebahn 20 (vgl. Figur 4) den hier gewählten Maximalwert '10' erreicht haben. In Figur 6b ist die HPA dargestellt, welche die horizontale Genauigkeit der Positionsbestimmung eines Luftfahrzeugs 1 für den hyperbolischen Ansatz beschreibt. Neben der Schnittpunktgüte (DOP) hängt sie auch von den Messfehlern ab. Umso kleiner die HPA ist, desto besser ist die Genauigkeit. Aufgrund der Messfehler erhält man nicht einen einzigen Schnittpunkt zweier Kurven, sondern eine Fläche oder Schnittpunktewolke, in der die Position des Luftfahrzeugs 1 liegen kann. In Figur 6b ist gut zu erkennen, dass mit dem hyperbolischen Ansatz auf dem Rollfeld hohe Genauigkeiten im Bereich von 0-8 m erreicht werden können, was ein sehr guter Wert ist. Außerhalb der Landebahn 20, insbesondere am Anfang und am Ende der Landebahn 20, erreicht die Genauigkeit jedoch ganz schnell inakzeptable Werte im Bereich von über 20 m.

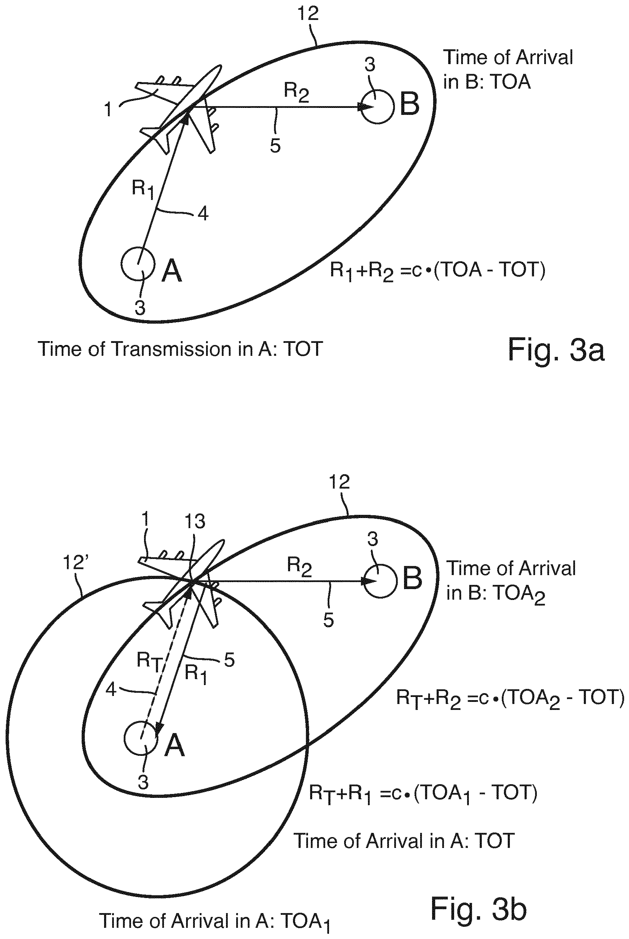

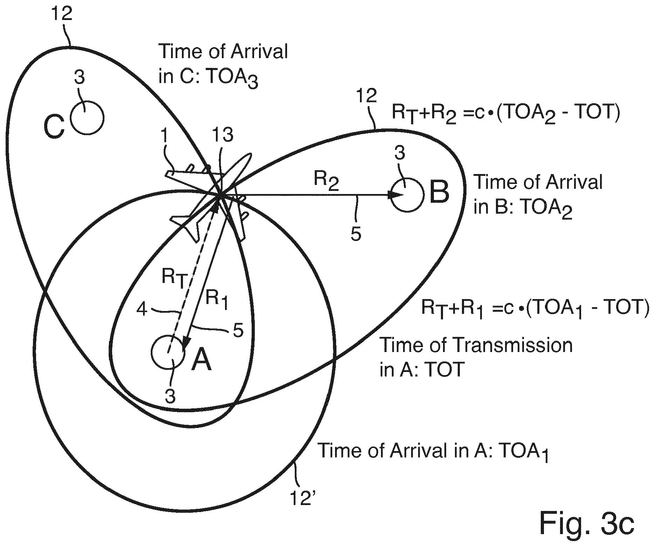

Ein sog. elliptischer Ansatz zur Positionsbestimmung wird nachfolgend anhand der Figur 3 näher erläutert. Dabei senden Transponder 2 von Luftfahrzeugen 1 als Antwort auf Abfragebotschaften 4 von Basisstationen 3 Antwortbotschaften 5 aus, die wiederum von Basisstationen 3 empfangen werden, die bspw. am Boden oder auf Satelliten angeordnet sind. Der Zeitpunkt (T0), zu dem der Transponder 2 im Luftfahrzeug 1 das Signal mit den Antwortbotschaften 4 aussendet, ist nicht bekannt. Anhand der bekannten Aussendezeitpunkte (TOT; TOI) der Abfragebotschaften 4 von einer ersten Basisstation A und der gemessenen Empfangszeitpunkte (TOA) der empfangenen Antwortbotschaften 5 an einer zweiten Basisstation B können folgende Zusammenhänge als Gleichungen definiert werden:

$$R_1 = c \cdot (T0 - TOT)$$

$$R_1 = \sqrt{(X - X_1)^2 + (Y - Y_1)^2 + (Z - Z_1)^2}$$

$$R_2 = c \cdot (TOA - TO)$$

$$R_2 = \sqrt{(X - X_2)^2 + (Y - Y_2)^2 + (Z - Z_2)^2}$$

Zu einem gegebenen Zeitpunkt befindet sich das Luftfahrzeug 1 an einer geometrischen Punktewolke mit der konstanten Entfernung $R_1 + R_2$:

$$R_1 + R_2 = c\ (TOA - TOT),$$

wobei $R_1$ die Entfernung von der aussendenden Basisstation A zu dem Transponder 2 des Luftfahrzeugs 1 und $R_2$ die Entfernung von dem Transponder 2 zu der empfangenden Basisstation B ist. Dies beschreibt eine Ellipse 12 (beim dreidimensionalen Ansatz ein Ellipsoid), in deren Brennpunkten die aussendende Basisstation A und die empfangende Basisstation B angeordnet sind (vgl. Figur 3a).

Wenn von beiden Basisstationen A und B Antwortbotschaften 5 des Transponders 2 des Luftfahrzeugs 1 empfangen werden (vgl. Figur 3b), wird der Empfangszeitpunkt an der Basisstation A als $TOA_1$ und der Empfangszeitpunkt an der Basisstation B als $TOA_2$ bezeichnet. Zu einem gegebenen Zeitpunkt befindet sich das Luftfahrzeug 1 an einer geometrischen Punktewolke auf einer Ellipse 12 (bzw. einem Ellipsoid), in deren Brennpunkten die Basisstationen A und B angeordnet sind, mit der konstanten Entfernung $R_T + R_2$:

$$R_T + R_2 = c\ (TOA_2 - TOT),$$

und auf einer Punktewolke auf einem Kreis 12' (bzw. beim dreidimensionalen Ansatz einer Kugel), als eine Sonderform einer Ellipse (bzw. eines Ellipsoids), bei der die beiden Brennpunkte in dem gemeinsamen Kreismittelpunkt zusammenfallen, in deren Mittelpunkt die Basisstation A angeordnet ist, mit der konstanten Entfernung $R_T + R_1$:

$$R_T + R_1 = c\ (TOA_1 - TOT),$$

wobei $R_T$ die Entfernung von der aussendenden Basisstation A zu dem Transponder 2 des Luftfahrzeugs 1, $R_1$ die Entfernung von dem Transponder 2 zu der ersten empfangenden Basisstation A und $R_2$ die Entfernung von dem Transponder 2 zu der zweiten empfangenden Basisstation B ist.

Die Position des Luftfahrzeugs 1 ergibt sich aus dem Schnittpunkt 13 der Ellipsen 12 (bzw. des Ellipsoids), bzw. wenn eine der Basisstationen 3, wie bspw. die Basisstation A, sowohl Abfragebotschaften 4 aussendet als auch Antwortbotschaften 5 empfängt, aus dem Schnittpunkt 13 der Ellipse 12 (bzw. des Ellipsoids) mit dem Kreis 12' (bzw. der Kugel).

Wenn eine dritte Basisstation C zum Empfangen von Antwortbotschaften 5 des Transponders 2 des Luftfahrzeugs 1 vorgesehen ist, die als Reaktion auf Abfragebotschaften 4 einer ersten Basisstation A von dem Transponder 2 ausgesandt werden, ergibt sich eine dritte Ellipse 12 (bzw. ein drittes Ellipsoid), in deren Brennpunkte die erste aussendende Basisstation A und die dritte empfangende Basisstation C angeordnet sind (vgl. Figur 3c). Dann ergibt sich die Position des Luftfahrzeugs 1 aus dem Schnittpunkt 13 der Ellipsen 12 (bzw. der Ellipsoide), bzw. wenn eine der Basisstationen 3, wie bspw. die Basisstation A, Abfragebotschaften 4 aussendet und Antwortbotschaften 5 empfängt, aus dem Schnittpunkt 13 der Ellipsen 12 (bzw. der Ellipsoide) und dem Kreis 12' (bzw. der Kugel).

Bei diesem Ansatz kann gegenüber dem hyperbolischen Ansatz eine Basisstation 3 eingespart werden. Es genügen drei Basisstationen 3, die Antwortbotschaften 5 empfangen, um die Position eines Luftfahrzeugs 1 eindeutig ermitteln zu können, wenn eine der Basisstationen 3 auch in der Lage ist Abfragebotschaften 4 zu senden. Der elliptische Ansatz wird vorzugsweise zur Flugsicherung und Flugleitung von Luftfahrzeugen verwendet, die außerhalb des von den Basisstationen eingeschlossenen Bereichs angeordnet sind (z.B. im Landeanflug, dem sog. Approach). Dies ist bspw. aus der Figur 5a ersichtlich, wo eine erwartete oder simulierte Dilution of Precision (DOP) für den elliptischen Ansatz gezeigt ist, d.h. wie sich Fehler in dem erfassten Empfangszeitpunkt der Antwortbotschaften 5 auf die Positionsbestimmung auswirken. Es ist deutlich zu erkennen, dass insbesondere am Anfang und am Ende der Landebahn 20 die Auswirkungen der Messfehler auf die Genauigkeit der Positionsbestimmung deutlich geringer sind als bei dem hyperbolischen Ansatz (vgl. Figur 5b).

Nachteilig bei dem elliptischen Ansatz ist jedoch, dass sich ein Transponder-individueller Verzögerungsoffset D auf die Genauigkeit und Zuverlässigkeit der Positionsbestimmung auswirkt. Das führt dazu, dass die Ergebnisse der Ermittlung der Entfernung des Luftfahrzeugs 1 zu einer Basisstation 3 bzw. der Position des Luftfahrzeugs 1 fehlerbehaftet und damit ungenau sind. Aus diesem Grund ist der elliptische Ansatz bisher nicht besonders gut für den Einsatz auf dem Rollfeld eines Flughafens geeignet. Dort wird also in der Regel weiterhin der hyperbolische Ansatz zur Flugsicherung und/oder Flugleitung eingesetzt, obwohl dieser mehr Basisstationen 3 benötigt als der elliptische Ansatz. Dies kann bspw. der Figur 6 entnommen werden, wo in Figur 6a die Genauigkeit der Positionsbestimmung nach dem elliptischen Ansatz und in Figur 6a die Genauigkeit nach dem hyperbolischen Ansatz für einen angenommenen Verzögerungsoffset D des Transponders 2 von D = 250 ns (Nanosekunden) dargestellt ist. Man erkennt deutlich, dass bei dem hyperbolischen Ansatz im Bereich des Flughafens annehmbare Werte für die Genauigkeit im Bereich von 0 - 8 m erzielt werden können, wohingegen der elliptische Ansatz aufgrund des Verzögerungsoffsets D >> 0 ns im Bereich des Flughafens recht große Abweichungen aufweist.

Unter Bezugnahme auf Figur 1 werden die Aussendezeitpunkte (TOT) der Abfragebotschaften 4 und die Empfangszeitpunkte (TOA) der Antwortbotschaften 5 an der Basisstation 3 erfasst. Mit Hilfe dieser Werte TOT und TOA kann die Entfernung R des Transponders 2 bzw. des Luftfahrzeugs 1 zu der Basisstation 3 ermittelt werden, wenn Abfrage und Empfang an derselben Basisstation 3 erfolgen. Die Verarbeitungszeit 6 des Transponders 2 umfasst eine bekannte Transponder-inhärente Verzögerungszeit aufgrund von Hardware- und/oder Software-mäßigen Eigenschaften des Transponders 2 sowie einen unbekannten Transponder-individuellen Verzögerungsoffset D und stochastische Zufallsfehler (bspw. Jitter in der Antwortverzögerung des Transponders 2). Der Verzögerungsoffset D bleibt zumindest für die Dauer eines Flugs des Luftfahrzeugs 1 konstant. Bei dem Mode S-Standard liegen der Verzögerungsoffset D typischerweise im Bereich von +/- 250 ns und der Zufallsfehler aufgrund des Jitters in der Antwortverzögerung des Transponders 2 im Bereich von +/- 80 ns. Bei dem Mode A/C-Standard liegen der Verzögerungsoffset D typischerweise im Bereich von +/- 500 ns und der Zufallsfehler aufgrund des Jitters in der Antwortverzögerung des Transponders 2 im Bereich von +/- 100 ns.

Die Entfernung des Luftfahrzeugs 1 zu der Basisstation 3, die mit Hilfe der Werte TOT und TOA ermittelt werden kann, ist um den Verzögerungsoffset D verfälscht.

$$(TOA - TOT) \cdot c = 2 \cdot R + (Delay + D) \cdot c + \varepsilon \qquad (Gl. 1)$$

wobei *TOA* der Empfangszeitpunkt der Antwortbotschaft 5 von dem Transponder 2, *TOT* der Absendezeitpunkt der Abfragebotschaft 4 von der Basisstation 3, c eine Signalübertragungsgeschwindigkeit, R die Entfernung zwischen der Basisstation 3 und dem Transponder 2 (wenn die aussendende und die empfangende Basisstation identisch sind), *Delay* die bekannte inhärente Verzögerungszeit des

Transponders 2, D der zu berücksichtigende unbekannte Transponder-individuelle Verzögerungsoffset und ε die Summe aller Zufallsfehler sind (bspw. aufgrund von TOT, TOA Jitter, Jitter in der Antwortverzögerung des Transponders 2, Ungenauigkeit der Position der Basisstation 3, atmosphärischen Beeinträchtigungen einer Übertragung der Botschaften 4, 5 und temporären Auswirkungen einer Multipath-Übertragung der Botschaften 4, 5).

Die vorliegende Erfindung schätzt den Verzögerungsoffset D und berücksichtigt diesen bei der Ermittlung der Entfernung R des Luftfahrzeugs 1 von der Basisstation 3 bzw. der Position des Luftfahrzeugs 1. Der abgeschätzte Verzögerungsoffset D des Transponders 2 kann genutzt werden, um in der empfangenden Basisstation 3 oder in der zentralen Verarbeitungseinheit 7 die gemessenen Zeitstempel der empfangenen Signale des Luftfahrzeugs 1 bzw. der empfangenen Antwortbotschaften 5 des Transponders 2 zu korrigieren.

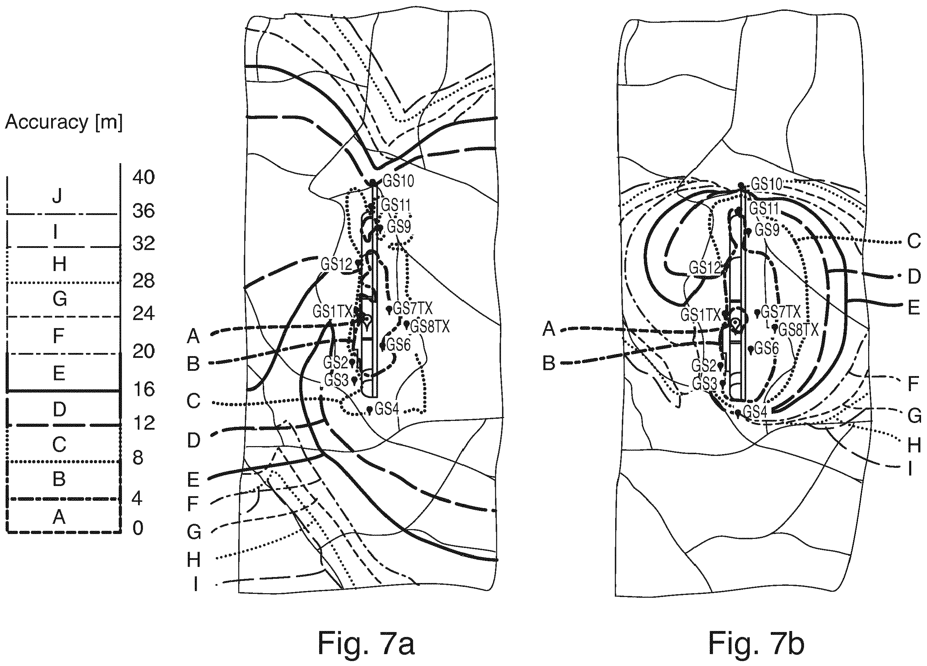

Bei Verwendung des elliptischen Ansatzes im Rahmen eines sog. Multilaterationssystems kann die Unsicherheit hinsichtlich des Verzögerungsoffsets D des Transponders 2 die erzielbare Genauigkeit der Positionsbestimmung beschränken (vgl. Figur 6a). Insbesondere im Bereich von Flughäfen wird der elliptische Ansatz (auch aktiver Ansatz) nicht eingesetzt, da er keine Vorteile im Vergleich zu dem hyperbolischen Ansatz (auch passiver Ansatz) hat. Mit der vorliegenden Erfindung kann die Ortungs- oder Positionsbestimmungsgenauigkeit insbesondere bei dem elliptischen Ansatz deutlich verbessert werden (vgl. Figur 7a), indem Messwerte (TOA) ohne Fehler aufgrund des Verzögerungsoffsets D des Transponders 2 bzw. mit deutlich reduzierten Fehlern genutzt werden. Damit kann der elliptische Ansatz auch im Bereich von Flughäfen eingesetzt werden. Dies erlaubt es ferner, die erforderliche Anzahl an Bodenstationen 3 gegenüber dem hyperbolischen Ansatz zu reduzieren. Außerdem können evtl. vorhandene redundante Bodenstationen 3 zur weiteren Verbesserung der Genauigkeit und/oder Zuverlässigkeit der Messungen der Zeitstempel der Botschaften 5 und damit der Positionsbestimmung eingesetzt werden.

Figur 7 zeigt das gleiche Szenario wie Figur 6, allerdings mit einem angenommenen Verzögerungsoffset D des Transponders 2 von D = 0 ns. Dies wäre also der Idealfall der vorliegenden Erfindung, wenn der Verzögerungsoffset D ganz genau ermittelt und seine Auswirkungen auf die Positionsbestimmung des Luftfahrzeugs 1 vollständig eliminiert werden könnten. Man erkennt deutlich, dass sich für den hyperbolischen Ansatz (vgl. Figur 7b) keine Veränderungen gegenüber der Figur 6b ergeben, da der Verzögerungsoffset D sowieso keine Auswirkungen auf die Genauigkeit der Positionsbestimmung nach dem hyperbolischen Ansatz hat. Anders verhält es sich jedoch mit dem elliptischen Ansatz (vgl. Figur 7a). Hier ist deutlich zu erkennen, dass die Genauigkeit der Positionsbestimmung nun wesentlich verbessert ist und im Bereich des Flughafens akzeptable Werte im Bereich von 0 - 8 m erreicht. Damit kann der elliptische Ansatz aufgrund der Berücksichtigung des Verzögerungsoffsets D bei der Positionsbestimmung des Luftfahrzeugs 1 ähnlich gute Werte für die Genauigkeit erreichen, wie der hyperbolische Ansatz.

Wenn man die Gleichung (1) nach dem Transponder-individuellen Verzögerungsoffset D auflöst, erhält man:

$$D + \varepsilon = \frac{(TOA - TOT - Delay) \cdot c - 2 \cdot r}{c},$$

wobei

$$r = \sqrt{(x_T - x_{GS})^2 + (y_T - y_{GS})^2 + (z_T - z_{GS})^2},$$

$x_T$, $y_T$, $z_T$ der Position des Transponders und $x_{GS}$, $y_{GS}$, $z_{GS}$ der Position der Basisstation entsprechen.

Der Zufallsfehler $\varepsilon$ kann nicht von dem Verzögerungsoffset D getrennt werden. Wenn man jedoch die Abfrage-Antwort-Kommunikation zwischen verschiedenen Basisstationen und dem Transponder des Luftfahrzeugs über einen längeren Zeitraum hinweg beobachtet, kann es gelingen, die Auswirkungen des Zufallsfehlers $\varepsilon$ weitgehend zu eliminieren, zumindest aber deutlich zu reduzieren. Es werden also für mehrere Zeitpunkte t Werte des TOT und des TOA an verschiedenen Basisstationen 3 ($GS_{k/j}$) erfasst und folgende Gleichungen aufgestellt:

$$\left(TOA_{1,GS_k} - TOT_{1,GS_j}\right) \cdot c = r_{1,GS_j} + r_{1,GS_k} + (Delay + D) \cdot c + s_{1,GS_j,GS_k}$$
$$\vdots$$
$$\left(TOA_{t,GS_k} - TOT_{t,GS_j}\right) \cdot c = r_{t,GS_j} + r_{t,GS_k} + (Delay + D) \cdot c + s_{t,GS_j,GS_k}$$

Die einzigen übereinstimmenden Anteile sind die Transponder Verzögerungsterme. Indem die aufgestellten Gleichungen als ein Funktionsmodell in einer Methode der kleinsten Fehlerquadrate genutzt werden, ist es möglich, den Verzögerungsoffset D zu schätzen, während gleichzeitig die Messungen und die ermittelten Positionen des Luftfahrzeugs 1 "angepasst" werden, damit sie in das Modell passen.

Zur Lösung des oben angegebenen Gleichungssystems kann ein iterativer Prozess genutzt werden, der Anfangswerte für die unbekannten Größen "korrigiert". Die folgenden Werte sind bekannt bzw. können in den Basisstationen 3 oder der Verarbeitungseinheit 7 anhand der vorhandenen Werte ermittelt werden: TOA, TOT, c, Delay, $x_{GS}$, $y_{GS}$, $z_{GS}$ (Position der Basisstation 3). Für die unbekannten Größe D wird vorzugsweise ein Anfangswert von 0 eingesetzt. Für die ebenfalls unbekannte Position $x_T$, $y_T$, $z_T$ des Luftfahrzeugs 1 werden (mit Unsicherheit behaftete) Schätzwerte von einer anderen Überwachungsquelle für jeden Zeitpunkt in dem beobachteten Zeitraum eingesetzt.

Der elliptische Ansatz nutzt die Pseudo-Entfernungs-Summen zwischen der empfangenden Basisstation 3 und den aussendenden Basisstationen 3. Die Entfernungen $r_i$ von dem Luftfahrzeug 1 zu den empfangenden Basisstationen 3 sind die folgenden:

$$r_i(x_T, y_T, z_T, t) = ct_i = \sqrt{(x_{T,t} - x_{GS})^2 + (y_{T,t} - y_{GS})^2 + (z_{T,t} - z_{GS})^2} + ct$$

Die Entfernungen $r_{tx}$ von dem Luftfahrzeug 1 zu den aussendenden Basisstationen 3 sind die folgenden (negatives Vorzeichen, da der Startpunkt als die Antwortzeit des Transponders 2 definiert wird):

$$r_{tx}(x_T, y_T, z_T, t, D) = ct_{tx}$$
$$= -\sqrt{(x_{T,t} - x_{GS})^2 + (y_{T,t} - y_{GS})^2 + (z_{T,t} - z_{GS})^2} + c(t - Delay - D)$$

Die beobachtbaren Größen $l_i$ sind somit:

$$l_i = r_i(x_T, y_T, z_T, t) - r_{tx}(x_T, y_T, z_T, t, D)$$
$$- \sqrt{(x_{T,t} - x_{GS})^2 + (y_{T,t} - y_{GS})^2 + (z_{T,t} - z_{GS})^2}$$
$$+ \sqrt{(x_{T,t} - x_{GS})^2 + (y_{T,t} - y_{GS})^2 + (z_{T,t} - z_{GS})^2} + c(Delay + D)$$

wobei

$l$ ein Indikator der beobachtbaren Größen,
$r_i$ die Entfernung zwischen dem Luftfahrzeug 1 und der empfangenden Basisstation 3,
$r_{tx}$ die Entfernung zwischen der aussendenden Basisstation 3 und dem Luftfahrzeug 1,
$(x, y, z)$ oder $(x_T, y_T, z_T)$ die unbekannte Position des Luftfahrzeugs 1,
$(x_i, y_i, z_i)$ oder $(x_{GS}, y_{GS}, z_{GS})$ die Position der i-ten empfangenden Basisstation 3,
$(x_{tx}, y_{tx}, z_{tx})$ oder $(x_{GS}, y_{GS}, z_{GS})$ die Position der aussendenden Basisstation 3,
$t_i$ der Empfangszeitpunkt, zu dem die Antwortbotschaft 5 bei der i-ten empfangenden Basisstation 3 empfangen wird,
$t_{tx}$ der Absendezeitpunkt der Abfragebotschaft 4 an der aussendenden Basisstation 3,
$t$ der Zeitpunkt, zu dem die Antwortbotschaft 5 von dem Transponder 2 in dem Luftfahrzeug 1 ausgesandt wurde,
$D$ der unbekannte Transponder-individuelle Verzögerungsoffset, und
$Delay$ der bekannte Anteil der Transponderverzögerungszeit ist.

Wenn man bspw. von vier empfangenden Basisstationen 3 ausgeht, wovon eine Basisstation eine kombinierte Empfangs-/Sendestation 3 ist, können die Differenzen zwischen der TOA und der TOT bzw. TOI an den Empfangsstationen 3 gebildet werden, die eine Summe der Übertragungszeiten von der Sendestation 3 zu dem Transponder 2 und von dem Transponder 2 zu der Empfangsstation 3 repräsentieren.

1. $SUM_1 = TOA_1 - TOI$
2. $SUM_2 = TOA_2 - TOI$
3. $SUM_3 = TOA_3 - TOI$
4. $SUM_3 = TOA_4 - TOI$

Die obigen Summengleichungen transformiert in den Entfernungsbereich und in der Matrixform geschrieben ergeben für vier Empfangsstationen 3 und eine Sendestation 3 die folgenden Gleichungen (der Verzögerungsoffset wird nachfolgend mit $t_{offset}$ statt des bisher verwendeten D bezeichnet und $p_i$ bezeichnet die Entfernungen):

$$l(x, y, z) = \begin{bmatrix} \overset{1}{1} & \overset{2}{0} & \overset{3}{0} & \overset{4}{0} & \overset{tx}{-1} \\ 0 & 1 & 0 & 0 & -1 \\ 0 & 0 & 1 & 0 & -1 \\ 0 & 0 & 0 & 1 & -1 \end{bmatrix} \cdot \begin{bmatrix} p_1(x, y, z, t) \\ p_2(x, y, z, t) \\ p_3(x, y, z, t) \\ p_4(x, y, z, t) \\ p_{tx}(x, y, z, t, t_{offset}) \end{bmatrix}$$

Das bedeutet, dass es möglich ist, die Differenzen l der Entfernungen auszudrücken als:

$$l(x, y, z) = T \cdot p(x, y, z, t, t_{offset})$$

wobei p für den Entfernungsvektor von dem Transponder 2 zu der Empfangsstation 3 steht und die letzte Zeile die Entfernung von dem Transponder 2 zu der Sendestation 3 enthält.

$$p(x, y, z, t, t_{offset}) = \begin{bmatrix} p_1(x, y, z, t) \\ \vdots \\ p_n(x, y, z, t) \\ p_{tx}(x, y, z, t, t_{offset}) \end{bmatrix}$$

Die Transformationsmatrix T, die einen Bezug der Entfernungen p zu den Entfernungssummen herstellt, muss die Dimension n x n+1 haben, wobei n die Anzahl der Empfangsstationen repräsentiert.

Die Positionsbestimmung kann durch das Funktionsmodell hergeleitet werden, wobei die obigen Gleichungen einen Bezug zwischen den beobachteten Werten und den unbekannten Werten herstellen. Da die Position x, y, z des Transponders 2 in den Gleichungen nicht linear ist, ist eine Taylorentwicklung um eine Näherungsposition, die hier mit 0 bezeichnet ist, erforderlich, wobei die Entwicklung erster Ordnung für die Berechnungen ausreichend ist.

$$l_i = l_i \big|_0 + \frac{\partial l_i}{\partial x} \big|_0 (x - x_0) + \frac{\partial l_i}{\partial y} \big|_0 (y - y_0) + \frac{\partial l_i}{\partial z} \big|_0 (z - z_0) + \frac{\partial l_i}{\partial t_{offset}} \big|_0 (t_{offset} - t_{offset0})$$

$$dl_i = l_i - l_i \big|_0 = \frac{\partial l_i}{\partial x} \big|_0 (x - x_0) + \frac{\partial l_i}{\partial y} \big|_0 (y - y_0) + \frac{\partial l_i}{\partial z} \big|_0 (z - z_0) + \frac{\partial l_i}{\partial t_{offset}} \big|_0 (t_{offset} - t_{offset0})$$

$$dl = H \cdot \begin{bmatrix} dx \\ dy \\ dz \\ dt_{offset} \end{bmatrix}$$

Für den elliptischen Ansatz müssen die nachfolgenden Ableitungen eingeführt werden:

$$\frac{\partial l_i}{\partial x} \big|_0 = \frac{x_i - x_0}{r_i} + \frac{x_{tx} - x_0}{r_{tx}}$$

$$\frac{\partial l_i}{\partial y} \big|_0 = \frac{y_i - y_0}{r_i} + \frac{y_{tx} - y_0}{r_{tx}}$$

$$\frac{\partial l_i}{\partial z} \big|_0 = \frac{z_i - z_0}{r_i} + \frac{z_{tx} - z_0}{r_{tx}}$$

$$\frac{\partial l_i}{\partial t_{offset}} \big|_0 = c$$

wobei i für die Entfernungen von dem Transponder 2 zu den Empfangsstationen 3 und tx für die Entfernung von dem Transponder 2 zu der Sendestation 3 steht. Man beachte, dass die Ableitungen nach l auch als Ableitungen nach p ausgedrückt werden können.

$$\frac{\partial l_i}{\partial x}\Big|_0 = \frac{\partial p_i}{\partial x}\Big|_0 - \frac{\partial p_{tx}}{\partial x}\Big|_0 = \frac{x_i - x_0}{r_i} + \frac{x_{tx} - x_0}{r_{tx}}$$

$$\frac{\partial l_i}{\partial y}\Big|_0 = \frac{\partial p_i}{\partial y}\Big|_0 - \frac{\partial p_{tx}}{\partial y}\Big|_0 = \frac{y_i - y_0}{r_i} + \frac{y_{tx} - y_0}{r_{tx}}$$

$$\frac{\partial l_i}{\partial z}\Big|_0 = \frac{\partial p_i}{\partial z}\Big|_0 - \frac{\partial p_{tx}}{\partial z}\Big|_0 = \frac{z_i - z_0}{r_i} + \frac{z_{tx} - z_0}{r_{tx}}$$

$$\frac{\partial l_i}{\partial t_{offset}}\Big|_0 = \frac{\partial p_i}{\partial t_{offset}}\Big|_0 - \frac{\partial p_{tx}}{\partial t_{offset}}\Big|_0 = 0 + c$$

Somit ergibt sich für den gesamten Beobachtungsvektor

$$\frac{\partial l}{\partial x}\Big|_0 = T\frac{\partial p}{\partial x}\Big|_0, \frac{\partial l}{\partial y}\Big|_0 = T\frac{\partial p}{\partial y}\Big|_0, \frac{\partial l}{\partial z}\Big|_0 = T\frac{\partial p}{\partial z}\Big|_0, \frac{\partial l}{\partial t_{offset}}\Big|_0 = T\frac{\partial p}{\partial t_{offset}}\Big|_0$$

Die Jacobi-Matrix H für den elliptischen Ansatz und n Basisstationen hätte dann die nachfolgende Form:

$$\begin{aligned}
H_{n,4} &= \left[\begin{array}{cccc} \frac{\partial l}{\partial x}\Big|_0 & \frac{\partial l}{\partial y}\Big|_0 & \frac{\partial l}{\partial z}\Big|_0 & \frac{\partial l}{\partial t_{offset}}\Big|_0 \end{array}\right] = T\cdot\left[\begin{array}{cccc} \frac{\partial p}{\partial x}\Big|_0 & \frac{\partial p}{\partial y}\Big|_0 & \frac{\partial p}{\partial z}\Big|_0 & \frac{\partial p}{\partial t_{offset}}\Big|_0 \end{array}\right] \\
&= \left[\begin{array}{cccc}
\frac{x_1 - x_0}{r_1} + \frac{x_{tx} - x_0}{r_{tx}} & \frac{y_1 - y_0}{r_1} + \frac{y_{tx} - y_0}{r_{tx}} & \frac{z_1 - z_0}{r_1} + \frac{z_{tx} - z_0}{r_{tx}} & c \\
\frac{x_2 - x_0}{r_2} + \frac{x_{tx} - x_0}{r_{tx}} & \frac{y_2 - y_0}{r_2} + \frac{y_{tx} - y_0}{r_{tx}} & \frac{z_2 - z_0}{r_2} + \frac{z_{tx} - z_0}{r_{tx}} & c \\
\vdots & \vdots & \vdots & \vdots \\
\frac{x_n - x_0}{r_n} + \frac{x_{tx} - x_0}{r_{tx}} & \frac{y_n - y_0}{r_n} + \frac{y_{tx} - y_0}{r_{tx}} & \frac{z_n - z_0}{r_n} + \frac{z_{tx} - z_0}{r_{tx}} & c
\end{array}\right]
\end{aligned}$$

Die obige Matrix H sowie die Gleichungen repräsentieren und beziehen sich auf eine Situation der Luftfahrzeug Parameter (Position und Verzögerungsoffset $t_{offset}$ des Transponders 2) für einen einzelnen Zeitpunkt. Eine Abschätzung der vier Unbekannten erfordert mindestens vier Beobachtungen und damit mindestens Messungen von drei Empfangsstationen 3 und einer Sendestation 3. Aufgrund der Tatsache, dass der Transponder Jitter im Vergleich zu dem Verzögerungsoffset $t_{offset}$ des Transponders 2 relativ groß ist und aufgrund der weiteren Zufallsfehler zusammengefasst als ε, ist es in der Regel nicht ausreichend, den Verzögerungsoffset $t_{offset}$ zuverlässig abzuschätzen aufgrund von nur Messungen, die an einer einzigen Position des Transponders 2 (bzw. des Luftfahrzeugs 1) erhalten wurden oder nur mithilfe der minimal benötigten Beobachtungen. Die Tatsache, dass der Verzögerungsoffset $t_{offset}$ während des Flugs konstant bleibt, hilft die Auswirkungen des Transponder Jitters, von dem angenommen wird, er habe ein Gauss'sches (oder zufälliges) Verhalten, zu reduzieren. Messungen zu verschiedenen Zeitpunkten können verwendet werden, um den Verzögerungsoffset $t_{offset}$ zuverlässig abschätzen zu können. Dabei wird wie bereits oben für einen einzigen Zeitpunkt beschrieben vorgegangen; jetzt müssen nur noch die verschiedenen Zeitpunkte in einen Bezug zueinander gebracht werden.

Wir erinnern uns, dass für einen einzigen Zeitpunkt die nachfolgenden Gleichungen gelten:

$$l_i = l_i \big|_0 + \frac{\partial l_i}{\partial x} \big|_0 (x - x_0) + \frac{\partial l_i}{\partial y} \big|_0 (y - y_0) + \frac{\partial l_i}{\partial z} \big|_0 (z - z_0) + \frac{\partial l_i}{\partial t_{offset}} \big|_0 (t_{offset} - t_{offset0})$$

$$= l_i \big|_0 + H_i \big|_0 \cdot dx$$

$$H_i \big|_0 = \left[ \frac{\partial l_i}{\partial x} \big|_0 \quad \frac{\partial l_i}{\partial y} \big|_0 \quad \frac{\partial l_i}{\partial z} \big|_0 \quad \frac{\partial l_i}{\partial t_{offset}} \big|_0 \right]$$

$$dx = \left[ x - x_0 \quad y - y_0 \quad z - z_0 \quad t_{offset} - t_{offset0} \right]$$

$$dl_i = l_i - l_i \big|_0 = H_i \big|_0 \cdot dx$$

wobei

i für die verschiedenen Messungen bezüglich der verschiedenen Basisstationen 3 steht, die zu dem bestimmten Zeitpunkt verfügbar sind,
x0, y0, z0 für die bestimmte Position stehen, an der sich das Luftfahrzeugs 1 zu dem bestimmten Zeitpunkt befunden hat, und
$t_{offset}$ unabhängig von der Position ist und während der gesamten Flugbahn konstant bleibt.

Wenn man einen Zeitindex t in diese Gleichungen einfügt, ergeben sich die nachfolgenden Gleichungen:

$$l_{i,t} = l_{i,t} \big|_0 + \frac{\partial l_i}{\partial x_t} \big|_0 (x_t - x_{0,t}) + \frac{\partial l_i}{\partial y_t} \big|_0 (y_t - y_{0,t}) + \frac{\partial l_i}{\partial z_t} \big|_0 (z_t - z_{0,t}) + \frac{\partial l_i}{\partial t_{offset}} \big|_0 (t_{offset} - t_{offset0})$$

$$dl_{i,t} = l_{i,t} - l_{i,t} \big|_0 = \frac{\partial l_i}{\partial x_t} \big|_0 (x_t - x_{0,t}) + \frac{\partial l_i}{\partial y_t} \big|_0 (y_t - y_{0,t}) + \frac{\partial l_i}{\partial z_t} \big|_0 (z_t - z_{0,t}) + \frac{\partial l_i}{\partial t_{offset}} \big|_0 (t_{offset} - t_{offset0})$$

und die entsprechenden Ableitungen

$$\frac{\partial l_{i,t}}{\partial x_t} \big|_0 = \frac{x_i - x_{0,t}}{r_{i,t}} + \frac{x_{tx} - x_{0,t}}{r_{tx,t}}$$

$$\frac{\partial l_{i,t}}{\partial y_t} \big|_0 = \frac{y_i - y_{0,t}}{r_{i,t}} + \frac{y_{tx} - y_{0,t}}{r_{tx,t}}$$

$$\frac{\partial l_{i,t}}{\partial z_t} \big|_0 = \frac{z_i - z_{0,t}}{r_{i,t}} + \frac{z_{tx} - z_{0,t}}{r_{tx,t}}$$

$$\frac{\partial l_{i,t}}{\partial t_{offset}} \big|_0 = c$$

Der Beobachtungsvektor ist aus den Messungen aller Basisstationen 3 während einer Zeitdauer P aufgebaut.

$$\underset{n\cdot P,1}{l} = \begin{bmatrix} l_{1,t_1} & l_{2,t_1} & \cdots & l_{n,t_1} & l_{1,t_2} & l_{2,t_2} & \cdots & l_{n,t_2} & \cdots & l_{1,t_p} & l_{2,t_p} & \cdots & l_{n,t_p} \end{bmatrix}^T$$

Die H-Matrix muss die verschiedenen Zeitpunkte berücksichtigen und hat die Form

$$\underset{n\cdot P,3\cdot P+1}{H} = \begin{bmatrix} \dfrac{\partial l}{\partial x_{t_1}}\Big|_0 & \dfrac{\partial l}{\partial y_{t_1}}\Big|_0 & \dfrac{\partial l}{\partial z_{t_1}}\Big|_0 & \dfrac{\partial l}{\partial x_{t_2}}\Big|_0 & \dfrac{\partial l}{\partial y_{t_2}}\Big|_0 & \dfrac{\partial l}{\partial z_{t_2}}\Big|_0 & \cdots & \dfrac{\partial l}{\partial x_{t_p}}\Big|_0 & \dfrac{\partial l}{\partial y_{t_p}}\Big|_0 & \dfrac{\partial l}{\partial z_{t_p}}\Big|_0 & \dfrac{\partial l}{\partial t_{offset}}\Big|_0 \end{bmatrix}$$

Indem die Ableitungen nach der Position eines Zeitpunkts $t_k$ ersetzt werden

$$\underset{n,3}{H_{t_k}} = \begin{bmatrix} \dfrac{\partial l_{t_k}}{\partial x}\Big|_0 & \dfrac{\partial l_{t_k}}{\partial y}\Big|_0 & \dfrac{\partial l_{t_k}}{\partial z}\Big|_0 \end{bmatrix} = T \cdot \begin{bmatrix} \dfrac{\partial p_{t_k}}{\partial x}\Big|_0 & \dfrac{\partial p_{t_k}}{\partial y}\Big|_0 & \dfrac{\partial p_{t_k}}{\partial z}\Big|_0 \end{bmatrix}$$

$$= \begin{bmatrix} \dfrac{x_1 - x_{0,t_k}}{r_{1,t_k}} & \dfrac{y_1 - y_{0,t_k}}{r_{1,t_k}} & \dfrac{z_1 - z_{0,t_k}}{r_{1,t_k}} \\[2ex] \dfrac{x_2 - x_{0,t_k}}{r_{2,t_k}} & \dfrac{y_2 - y_{0,t_k}}{r_{2,t_k}} & \dfrac{z_2 - z_{0,t_k}}{r_{2,t_k}} \\[1ex] \vdots & \vdots & \vdots \\[1ex] \dfrac{x_n - x_{0,t_k}}{r_{n,t_k}} & \dfrac{y_n - y_{0,t_k}}{r_{n,t_k}} & \dfrac{z_n - z_{0,t_k}}{r_{n,t_k}} \end{bmatrix}$$

kann die gesamte H-Matrix geschrieben werden als

$$\underset{n\cdot P,3\cdot P+1}{H} = \begin{bmatrix} \dfrac{\partial l}{\partial x_{t_1}}\Big|_0 & \dfrac{\partial l}{\partial y_{t_1}}\Big|_0 & \dfrac{\partial l}{\partial z_{t_1}}\Big|_0 & \dfrac{\partial l}{\partial x_{t_2}}\Big|_0 & \dfrac{\partial l}{\partial y_{t_2}}\Big|_0 & \dfrac{\partial l}{\partial z_{t_2}}\Big|_0 & \cdots & \dfrac{\partial l}{\partial x_{t_p}}\Big|_0 & \dfrac{\partial l}{\partial y_{t_p}}\Big|_0 & \dfrac{\partial l}{\partial z_{t_p}}\Big|_0 & \dfrac{\partial l}{\partial t_{offset}}\Big|_0 \end{bmatrix}$$

$$= \begin{bmatrix} \underset{n,3}{H_{t_1}} & 0 & \cdots & 0 & c \\[1ex] & \underset{n,3}{H_{t_2}} & \cdots & & c \\[1ex] \vdots & \vdots & \cdots & \vdots & \vdots \\[1ex] & & \cdots & \underset{n,3}{H_{t_p}} & c \end{bmatrix}$$

Aus den unten angegebenen Gleichungen kann der unbekannte Vektor hergeleitet werden.

$$dl = l - l\big|_0$$

$$dl = H \cdot \begin{bmatrix} dx_{t_1} & dy_{t_1} & dz_{t_1} & dx_{t_2} & dy_{t_1} & dz_{t_2} & \cdots & dx_{t_p} & dy_{t_p} & dz_{t_p} & dt_{offset} \end{bmatrix}^T$$

$$= H \cdot dx$$

$$dx = \left(H' \cdot H\right)^{-1} H' \cdot dl$$

Der Vektor dx umfasst die Korrekturen bezüglich der ursprünglichen Parameter $(x_0, y_0, z_0)$ für jeden Zeitpunkt in dem Intervall von 1 bis P sowie die Korrektur aufgrund des Verzögerungsoffsets $t_{offset}$. Der Vektor der Unbekannten ergibt sich zu

$$X_0 = X_0 + dx$$

wobei

$$X_0 = \begin{bmatrix} x_{0,t_1} & y_{0,t_1} & z_{0,t_1} & x_{0,t_2} & y_{0,t_1} & z_{0,t_2} & \cdots & x_{0,t_P} & y_{0,t_P} & z_{0,t_P} & t_{offset_0} \end{bmatrix}^T$$

Das Korrekturverfahren ist iterativ und sollte beendet werden, entweder wenn sich nahezu keine Änderung mehr in dem abzuschätzenden unbekannten Vektor mehr ergibt, oder wenn die Anzahl der Iterationen zu hoch wird (keine Konvergenz). Im Sinne des ersten Abbruchkriteriums wird überprüft, ob der unbekannte Vektor $X_0$ innerhalb vorgebbarer Grenzwerte $X_{grenz1}$, $X_{grenz2}$ konvergiert ($X_{grenz1} < X_0 < X_{grenz2}$). Für das zweite Abbruchkriterium wird überprüft, ob die Anzahl der Iterationen i einen vorgebbaren Grenzwert $i_{grenz}$ erreicht oder überschritten hat ($i >= i_{grenz}$).
Im Falle des elliptischen Ansatzes müssen aufgrund der gebildeten Summen sowohl die $\sigma_{Rx\_range}$ als auch die $\sigma_{Tx\_range}$ als Varianz berücksichtigt werden. Allerdings sind die nichtdiagonalen Elemente wegen der Korrelation zwischen den Summen aufgrund der Entfernung der Sendestation 3 zum Luftfahrzeug 1, die Bestandteil jeder Summe ist, nicht Null. Die Kovarianz-Matrix der Messungen kann auf Grundlage des Beobachtungs-Modells mittels der Transformations-Matrix T und durch Anwendung des Gesetzes der Fehlerfortpflanzung hergeleitet werden.

$$l(x, y, z) = T \cdot p(x, y, z, t)$$

$$\Sigma_l(x, y, z) = T \cdot \Sigma_p(x, y, z, t) \cdot T'$$

$$\Sigma_p(x, y, z, t) = \begin{bmatrix} \sigma^2_{RX\_range} & 0 & 0 & 0 \\ 0 & \ddots & 0 & 0 \\ \vdots & \cdots & \sigma^2_{RX\_range} & \vdots \\ 0 & 0 & 0 & \sigma^2_{TX\_range} \end{bmatrix}$$

Im Falle von drei Basisstationen 3, wobei eine Station 3 einen kombinierten Empfänger/Sender darstellt, wäre die Kovarianz-Matrix der Messungen

$$\Sigma_l(x, y, z) \atop {n,n} = \begin{bmatrix} \sigma^2_{RX\_range} + \sigma^2_{TX\_range} & \sigma^2_{TX\_range} & \sigma^2_{TX\_range} \\ \sigma^2_{TX\_range} & \sigma^2_{RX\_range} + \sigma^2_{TX\_range} & \sigma^2_{TX\_range} \\ \sigma^2_{TX\_range} & \sigma^2_{TX\_range} & \sigma^2_{RX\_range} + \sigma^2_{TX\_range} \end{bmatrix}$$

Die Genauigkeit der Positionsbestimmung kann auch mittels des Funktionsmodells hergeleitet werden. Das Gesetz der Fehlerfortpflanzung ist wie folgt:

$$\sigma^2_{l_i} = \left(\frac{\partial l_i}{\partial x} \Big|_0\right)^2 \sigma^2_x + \left(\frac{\partial l_i}{\partial y} \Big|_0\right)^2 \sigma^2_y + \left(\frac{\partial l_i}{\partial z} \Big|_0\right)^2 \sigma^2_z + \left(\frac{\partial l_i}{\partial t_{offset}} \Big|_0\right)^2 \sigma^2_{t_{offset}}$$

Die Kovarianz-Matrix der Unbekannten wird damit zu:

$$\Sigma_{\bar{x}} = \left(H' \cdot H\right)^{-1} \cdot H' \cdot \Sigma_l \cdot H \cdot \left(H' \cdot H\right)^{-1} = \left(H' \cdot \Sigma_l^{-1} \cdot H\right)^{-1}$$

Die Kovarianz-Matrix der Unbekannten lässt sich auch in Abhängigkeit von den Entfernungen p anstatt von den Summen ausdrücken:

$$
\begin{aligned}
\Sigma_{\bar{x}} &= \left[\frac{\partial p}{\partial x} \quad \frac{\partial p}{\partial y} \quad \frac{\partial p}{\partial z} \quad \frac{\partial p}{\partial t_{offset}}\right]^{-1} \cdot T^{-1} \cdot \Sigma_l \cdot T'^{-1} \cdot \left[\frac{\partial p}{\partial x} \quad \frac{\partial p}{\partial y} \quad \frac{\partial p}{\partial z} \quad \frac{\partial p}{\partial t_{offset}}\right]'^{-1} \\
&= \left[\frac{\partial p}{\partial x} \quad \frac{\partial p}{\partial y} \quad \frac{\partial p}{\partial z} \quad \frac{\partial p}{\partial t_{offset}}\right]^{-1} \cdot T^{-1} \cdot T \cdot \Sigma_p(x,y,z,t) \cdot T' \cdot T'^{-1} \cdot \left[\frac{\partial p}{\partial x} \quad \frac{\partial p}{\partial y} \quad \frac{\partial p}{\partial z} \quad \frac{\partial p}{\partial t_{offset}}\right]'^{-1} \\
&= \left[\frac{\partial p}{\partial x} \quad \frac{\partial p}{\partial y} \quad \frac{\partial p}{\partial z} \quad \frac{\partial p}{\partial t_{offset}}\right]^{-1} \cdot \Sigma_p(x,y,z,t) \cdot \left[\frac{\partial p}{\partial x} \quad \frac{\partial p}{\partial y} \quad \frac{\partial p}{\partial z} \quad \frac{\partial p}{\partial t_{offset}}\right]'^{-1}
\end{aligned}
$$

Die horizontale Positionsgenauigkeit ist

$$HPA = \sqrt{\sigma_x^{\,2} + \sigma_y^{\,2}}$$

Das hier beschriebene Verfahren zur Flugsicherung und/oder Flugleitung von Luftfahrzeugen 1 weist deutliche Unterschiede zu bekannten Radar-Systemen auf. Zum einen verfügen Radar-Bodenstationen über eine drehende Antenne und können auf ausgesandte Abfragebotschaften erst dann eine Antwortbotschaft von einem Luftfahrzeug empfangen, wenn die drehende Antenne wieder auf das Luftfahrzeug 1 gerichtet ist. Die Positionsbestimmung eines Luftfahrzeugs 1 erfolgt bei Radar-Systemen durch jede Radar-Bodenstation alleine aus der Zeit (Drehposition der Antenne) und dem Antennenwinkel. Mehrere Radar-Bodenstationen eines Radar-Clusters werden allenfalls eingesetzt, um für einen Fluglotsen ein gemergetes Bild des Luftraums zur Verfügung zu stellen, nicht jedoch zur Positionsbestimmung von Luftfahrzeugen.

Die Genauigkeit von Radar-Systemen ist insbesondere durch die Winkelauflösung der Antenne und weniger durch den Verzögerungsoffset des Transponders begrenzt. Im Übrigen erlaubt die Positionsbestimmung mittels einer einzelnen Radar-Bodenstation keine Ermittlung oder Abschätzung des Transponder-individuellen Verzögerungsoffsets, da keine Überbestimmung vorliegt, die jedoch für die Berücksichtigung des Verzögerungsoffsets unabdingbar ist.

**Patentansprüche**

1. Verfahren zur Flugsicherung und/oder Flugleitung von Luftfahrzeugen (1), bei dem von mindestens einer Basisstationen (3) einer Flugsicherungs- und/oder Flugleitungsanordnung (8) mindestens eine Abfragebotschaft (4) ausgesandt wird, die von einem Transponder (2) in mindestens einem zu sichernden und/oder zu leitenden Luftfahrzeug (1) empfangen wird, von dem Transponder (2) als Reaktion auf die mindestens eine Abfragebotschaft (4) mindestens eine Antwortbotschaft (5) ausgesandt und von mehreren Basisstationen (3) empfangen wird und in einer Verarbeitungseinheit (7) der Flugsicherungs- und/oder Flugleitungsanordnung (8), mit der die aussendende und die empfangenden Basisstationen (3) in Verbindung stehen, auf Grundlage des Absendezeitpunkts (TOT) der mindestens einen Abfragebotschaft (4) und der Empfangszeitpunkte (TOA) der Antwortbotschaften (5) eine aktuelle Position (x, y, z ; $x_T$, $y_T$, $z_T$) des Luftfahrzeugs (1) ermittelt wird, **dadurch gekennzeichnet, dass** bei der Ermittlung der Position (x, y, z ; $x_T$, $y_T$, $z_T$) des Luftfahrzeugs (1) in der Verarbeitungseinheit (7) ein Transponder-individueller Verzögerungsoffset (D; $t_{offset}$) berücksichtigt wird.

2. Verfahren nach Anspruch 1, **dadurch gekennzeichnet, dass** die Basisstationen (3) als Bestandteil einer MLAT Flugsicherungs- und/oder Flugleitungsanordnung (8) ausgebildet sind und dass die Position (x, y, z ; $x_T$, $y_T$, $z_T$) des Luftfahrzeugs (1) auf Grundlage von Entfernungen (R; $r_i$, $r_{tx}$; p) des Luftfahrzeugs (1) bezüglich der empfangenden und aussendenden Basisstationen (3) ermittelt wird.

3. Verfahren nach Anspruch 1, **dadurch gekennzeichnet, dass** die Basisstationen (3) als Radarstationen einer Flugsicherungs- und/oder Flugleitungsanordnung (8) ausgebildet sind und dass die Position (x, y, z ; $x_T$, $y_T$, $z_T$) des Luftfahrzeugs (1) auf Grundlage einer Entfernung (R; r; p) und eines Winkels des Luftfahrzeugs (1) bezüglich der empfangenden Basisstationen (3) ermittelt wird.

4. Verfahren nach einem der Ansprüche 1 bis 3, **dadurch gekennzeichnet, dass** der Verzögerungsoffset (D; $t_{offset}$) anhand von mehreren im Vorfeld der eigentlichen Positionsbestimmung des Luftfahrzeugs (1) ausgesandter Abfragebotschaften (4) und empfangener Antwortbotschaften (5) abgeschätzt wird.

5. Verfahren nach Anspruch 4, **dadurch gekennzeichnet, dass** für einen in Reichweite zu mindestens einer Basisstation (3) neu detektierten Transponder (2) eines Luftfahrzeugs (1) bis zur erfolgreichen Abschätzung des Verzögerungsoffsets (D; $t_{offset}$) die Häufigkeit der ausgesandten Abfragebotschaften (4) gegenüber einem Normalbetrieb der Flugsicherungs- und/oder Flugleitungsanordnung (8) vorübergehend gezielt erhöht wird, um innerhalb einer möglichst kurzen Zeit den Verzögerungsoffset (D; $t_{offset}$) zuverlässig abschätzen zu können.

6. Verfahren nach Anspruch 4 oder 5, **dadurch gekennzeichnet, dass** eine Verarbeitungszeit (6) eines Transponders (2) aus der Gleichung

$$(TOA_i - TOT_{tx}) \cdot c = r_{tx} + r_i + (Delay + D) \cdot c + \varepsilon \qquad (Gl. 1)$$

ermittelt wird, wobei *TOA$_i$* ein Empfangszeitpunkt einer Antwortbotschaft (5) von dem Transponder (2) an einer Basisstation (3), *TOT$_{tx}$* ein Absendezeitpunkt einer Abfragebotschaft (4) von einer Basisstation (3), c eine Signalübertragungsgeschwindigkeit, *r$_{tx}$* eine Entfernung zwischen der aussendenden Basisstation (3) zu dem Transponder (2), *r$_i$* eine Entfernung zwischen der empfangenden Basisstation (3) zu dem Transponder *(2), Delay* eine bekannte inhärente Verzögerungszeit des Transponders (2), *D* der zu berücksichtigende unbekannte Transponder-individuelle Verzögerungsoffset und $\varepsilon$ eine Summe von Zufallsfehlern des Transponders (2) ist, wobei

$$r_i = \sqrt{\left(x_T - x_{GS,i}\right)^2 + \left(y_T - y_{GS,i}\right)^2 + \left(z_T - z_{GS,i}\right)^2},$$

$$r_{tx} = \sqrt{\left(x_T - x_{GS,tx}\right)^2 + \left(y_T - y_{GS,tx}\right)^2 + \left(z_T - z_{GS,tx}\right)^2}$$

$x_T$, $y_T$, $z_T$ der Position des Transponders (2) und $x_{GS}$, $y_{GS}$, $z_{GS}$ der Position der empfangenden (*i*) bzw. der aussendenden (*tx*) Basisstation (3) entsprechen.

7. Verfahren nach Anspruch 6, **dadurch gekennzeichnet, dass** nach Art der Gleichung (Gl. 1) ein Gleichungssystem mit mehreren Gleichungen für mehrere Zeitpunkte und für mehrere aussendende und/oder empfangende Basisstationen (3) erstellt wird und durch Lösen des Gleichungssystems der Verzögerungsoffset (D) bzw. für zukünftiges Empfangen einer Antwortbotschaft (5) von dem Transponder (2) die um den Verzögerungsoffset (D) korrigierten Empfangszeiten (TOA) abgeschätzt werden.

8. Verfahren nach Anspruch 7, **dadurch gekennzeichnet, dass** zum Abschätzen des Verzögerungsoffsets (D) bzw. der korrigierten Empfangszeit (TOA) ein iteratives Verfahren nach der Methode der kleinsten Fehlerquadrate auf das Gleichungssystem angewandt wird.

9. Verfahren nach Anspruch 8, **dadurch gekennzeichnet, dass** das iterative Verfahren als Anfangswerte der Unbekannten des Gleichungssystems für den Transponder-individuellen Verzögerungsoffset (D) Null und für die Position (x, y, z ; $x_T$, $y_T$, $z_T$) des Transponders (2) des Luftfahrzeugs (1) die von einer anderen Überwachungsquelle geschätzte Position des Transponders (2) verwendet werden und dass die Methode der kleinsten Fehlerquadrate abgebrochen wird und das Gleichungssystem als näherungsweise gelöst gilt, wenn das iterative Verfahren im Rahmen vorgebbarer Grenzwerte ($X_{grenz1}$, $X_{grenz2}$) konvergiert.

10. Verfahren nach einem der Ansprüche 1 bis 9, **dadurch gekennzeichnet, dass** das Verfahren ein elliptisches Verfahren zur Flugsicherung und/oder Flugleitung von Luftfahrzeugen (1) ist, bei dem sich die ermittelte Entfernung (R; r; p) eines Luftfahrzeugs (1) auf einer Ellipse (12) befindet, in deren Brennpunkten zwei Basisstationen (3) angeordnet sind, wovon eine Abfragebotschaften (4) aussendet und die andere Antwortbotschaften (5) empfängt, und aus dem Schnittpunkt (13) mehrerer Ellipsen (12) die Position $(x, y, z ; x_T, y_T, z_T)$ des Luftfahrzeugs (1) ermittelt wird.

11. Verfahren nach einem der vorangehenden Ansprüche, **dadurch gekennzeichnet, dass** die Abfragebotschaften (4) an alle in Reichweite befindlichen Transponder (2) von Luftfahrzeugen (1) oder gezielt an mindestens einen ausgewählten Transponder (2) von in Reichweite befindlichen Transpondern (2) von Luftfahrzeugen (1) ausgesandt werden.

12. Verfahren nach Anspruch 11, **dadurch gekennzeichnet, dass** die an alle in Reichweite befindlichen Transponder (2) ausgesandten Abfragebotschaften (4) nach einem vorgegebenen zeitlichen Muster ausgesandt werden.

13. Verfahren nach Anspruch 11, **dadurch gekennzeichnet, dass** die gezielt an den mindestens einen ausgewählten Transponder (2) ausgesandten Abfragebotschaften (4) ein Adressfeld mit mindestens einer individuellen Adresse des mindestens einen ausgewählten Transponders (2) aufweisen.

14. Verarbeitungseinheit (7) einer Flugsicherungs- und/oder Flugleitungsanordnung (8) für Luftfahrzeuge (1), wobei die Anordnung (8) mehrere Basisstationen (3) umfasst, von denen mindestens eine ausgebildet ist, Abfragebotschaften (4) auszusenden, die von einem Transponder (2) in mindestens einem zu sichernden und/oder zu leitenden Luftfahrzeug (1) empfangen werden, und von denen mehrere ausgebildet sind, von dem Transponder (2) als Reaktion auf die empfangenen Abfragebotschaften (4) ausgesandte Antwortbotschaften (5) zu empfangen, wobei die Verarbeitungseinheit (7) mit den Basisstationen (3) in Verbindung steht und ausgebildet ist, auf Grundlage der Absendezeitpunkte (TOT) der Abfragebotschaften (4) und der Empfangszeitpunkte (TOA) der Antwortbotschaften (5) eine aktuelle Position $(x, y, z ; x_T, y_T, z_T)$ des Luftfahrzeugs (1) zu ermitteln, **dadurch gekennzeichnet, dass** die Verarbeitungseinheit (7) ferner ausgebildet ist, bei der Ermittlung der Position $(x, y, z ; x_T, y_T, z_T)$ des Luftfahrzeugs (1) einen Transponder-individuellen Verzögerungsoffset $(D; t_{offset})$ zu berücksichtigen.

15. Verarbeitungseinheit (7) nach Anspruch 14, **dadurch gekennzeichnet, dass** die Verarbeitungseinheit (7) zur Ausführung des Verfahrens nach einem der Ansprüche 2 bis 13 ausgebildet ist.

Fig. 1

$R_2 - R_1 = c \cdot (TOA_2 - TOA_1)$

3  Time of Arrival in B: $TOA_2$

B

$R_2$

10

1

$R_1$

A

Time of Arrival in A: $TOA_1$

3

Fig. 2a

10

Time of Arrival in B: $TOA_2$

Time of Arrival
in C: $TOA_3$

B

$R_2$

3

C

$R_3$

10

3

1

11

10

$R_1$

A

3

Time of Arrival in A: $TOA_1$

Fig. 2b

Fig. 3a

Time of Arrival in B: TOA

$R_1 + R_2 = c \cdot (TOA - TOT)$

Time of Transmission in A: TOT

Fig. 3b

Time of Arrival in B: $TOA_2$

$R_T + R_2 = c \cdot (TOA_2 - TOT)$

$R_T + R_1 = c \cdot (TOA_1 - TOT)$

Time of Arrival in A: TOT

Time of Arrival in A: $TOA_1$

Fig. 3c

Fig. 4

Fig. 5b

Fig. 5a

Fig. 6b

Fig. 6a

Accuracy [m]

Fig. 7b

Fig. 7a

Accuracy [m]

EP 3 330 732 A1

**Europäisches Patentamt**
**European Patent Office**
**Office européen des brevets**

# EUROPÄISCHER RECHERCHENBERICHT

Nummer der Anmeldung

EP 16 20 2053

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 017 930 A (STOLTZ JOHN R [US] ET AL) 21. Mai 1991 (1991-05-21) * Spalte 3, Zeile 23 - Spalte 6, Zeile 42; Abbildungen 1, 2 * ----- | 1-15 | INV. G01S7/00 G01S13/782 G01S13/878 G08G5/00 |
| A | US 3 665 464 A (MEILANDER WILLARD C) 23. Mai 1972 (1972-05-23) * das ganze Dokument * ----- | 1-15 | |
| A | US 2007/040734 A1 (EVERS CARL A [US] ET AL) 22. Februar 2007 (2007-02-22) * das ganze Dokument * ----- | 1-15 | |
| A | US 2005/024256 A1 (RIDDERHEIM STEFAN [SE] ET AL) 3. Februar 2005 (2005-02-03) * das ganze Dokument * ----- | 1-15 | |

RECHERCHIERTE SACHGEBIETE (IPC)

G01S
G08G

Der vorliegende Recherchenbericht wurde für alle Patentansprüche erstellt

| Recherchenort | Abschlußdatum der Recherche | Prüfer |
|---|---|---|
| München | 10. Mai 2017 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

29

**ANHANG ZUM EUROPÄISCHEN RECHERCHENBERICHT**
**ÜBER DIE EUROPÄISCHE PATENTANMELDUNG NR.**                     EP 16 20 2053

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2017

| Im Recherchenbericht angeführtes Patentdokument | Datum der Veröffentlichung | Mitglied(er) der Patentfamilie | Datum der Veröffentlichung |
|---|---|---|---|
| US 5017930 A | 21-05-1991 | AT 152248 T | 15-05-1997 |
| | | AU 645551 B2 | 20-01-1994 |
| | | BR 9105951 A | 13-10-1992 |
| | | CA 2072121 A1 | 26-07-1991 |
| | | DE 69125822 D1 | 28-05-1997 |
| | | DE 69125822 T2 | 06-11-1997 |
| | | DK 0512078 T3 | 20-10-1997 |
| | | EP 0512078 A1 | 11-11-1992 |
| | | ES 2102395 T3 | 01-08-1997 |
| | | FI 923376 A | 24-07-1992 |
| | | GR 3024056 T3 | 31-10-1997 |
| | | JP 2588662 B2 | 05-03-1997 |
| | | JP H05506951 A | 07-10-1993 |
| | | KR 0171428 B1 | 01-05-1999 |
| | | NO 922930 A | 15-09-1992 |
| | | RU 2100820 C1 | 27-12-1997 |
| | | US 5017930 A | 21-05-1991 |
| | | WO 9111730 A1 | 08-08-1991 |
| US 3665464 A | 23-05-1972 | KEINE | |
| US 2007040734 A1 | 22-02-2007 | KEINE | |
| US 2005024256 A1 | 03-02-2005 | CA 2533442 A1 | 03-02-2005 |
| | | EP 1651980 A1 | 03-05-2006 |
| | | US 2005024256 A1 | 03-02-2005 |
| | | WO 2005010553 A1 | 03-02-2005 |

EPO FORM P0461

Für nähere Einzelheiten zu diesem Anhang : siehe Amtsblatt des Europäischen Patentamts, Nr.12/82